(19) Europäisches Patentamt
European Patent Office
Office européen des brevets

(11) **EP 4 618 113 A1**

(12) **EUROPEAN PATENT APPLICATION**
published in accordance with Art. 153(4) EPC

(43) Date of publication:
**17.09.2025 Bulletin 2025/38**

(21) Application number: **23888587.5**

(22) Date of filing: **01.11.2023**

(51) International Patent Classification (IPC):
$H01B\ 13/00^{(2006.01)}$    $C01B\ 25/14^{(2006.01)}$
$C03B\ 8/00^{(2006.01)}$    $H01B\ 1/06^{(2006.01)}$
$H01B\ 1/10^{(2006.01)}$    $H01M\ 4/62^{(2006.01)}$
$H01M\ 10/052^{(2010.01)}$    $H01M\ 10/0562^{(2010.01)}$

(52) Cooperative Patent Classification (CPC):
**C01B 25/14; C03B 19/00; H01B 1/06; H01B 1/10; H01B 13/00; H01M 4/62; H01M 10/052; H01M 10/0562; Y02E 60/10**

(86) International application number:
**PCT/JP2023/039382**

(87) International publication number:
**WO 2024/101239 (16.05.2024 Gazette 2024/20)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **11.11.2022 JP 2022181107**
        **11.11.2022 JP 2022181108**
        **11.11.2022 JP 2022181109**

(71) Applicant: **Furukawa Co., Ltd.**
**Chiyoda-ku**
**Tokyo 100-8370 (JP)**

(72) Inventor: **YOSHIDA, Tatsushi**
**Tsukuba-shi, Ibaraki 305-0856 (JP)**

(74) Representative: **Müller, Christian Stefan Gerd**
**ZSP Patentanwälte PartG mbB**
**Hansastraße 32**
**80686 München (DE)**

(54) **METHOD FOR PRODUCING SULFIDE-BASED INORGANIC SOLID ELECTROLYTE MATERIAL, METHOD FOR PRODUCING PHOSPHORUS SULFIDE COMPOSITION, METHOD FOR EVALUATING PHOSPHORUS SULFIDE COMPOSITION, AND PHOSPHORUS SULFIDE COMPOSITION**

(57)    A method for producing a sulfide-based inorganic solid electrolyte material, the method including a step of obtaining a sulfide-based inorganic solid electrolyte material in a vitreous state by mechanically processing a raw material composition of the sulfide-based inorganic solid electrolyte material including lithium sulfide and a phosphorus sulfide composition such that each component is vitrified in a chemical reaction, in which the phosphorus sulfide composition has three or more peaks in a range of $2\theta = 22.5°$ or more and $24.5°$ or less in an X-ray diffraction analysis spectrum obtained by X-ray diffraction analysis.

[Fig.3]

EP 4 618 113 A1

**Description**

TECHNICAL FIELD

The present invention relates to a method for producing a sulfide-based inorganic solid electrolyte material, a method for producing a phosphorus sulfide composition, a method for evaluating a phosphorus sulfide composition, and a phosphorus sulfide composition.

BACKGROUND ART

In general, a lithium ion battery is used as a power supply of a small mobile device such as a mobile phone or a laptop. In addition, recently, the lithium ion battery has been used not only as a power supply of a small mobile device but also as a power supply of an electric vehicle, an electric power storage, or the like.

In a currently commercially available lithium ion battery, an electrolytic solution including a combustible organic solvent is used. On the other hand, in a lithium ion battery in which the electrolytic solution is replaced with a solid electrolyte such that the entire battery is made of a solid (hereinafter, also referred to as "all-solid-state lithium ion battery"), a combustible organic solvent is not used in the battery. Therefore, it is considered that a safety device can be simplified and production costs or productivity is excellent.

As a solid electrolyte material used for the solid electrolyte, for example, a sulfide-based inorganic solid electrolyte material is known.

Patent Document 1 (Japanese Unexamined Patent Publication No. 2016-27545) describes a sulfide-based solid electrolyte material having a peak at a position of $2\theta = 29.86° \pm 1.00°$ in X-ray diffraction measurement using a CuKα ray and a composition of $Li_{2y+3}PS_4$ ($0.1 \leq y \leq 0.175$).

RELATED DOCUMENT

PATENT DOCUMENT

Patent Document 1: Japanese Unexamined Patent Publication No. 2016-27545

SUMMARY OF THE INVENTION

TECHNICAL PROBLEM

According to the investigation conducted by the present inventors, it has been clarified that in a case where the kind of phosphorus sulfide which is one of the raw materials of the sulfide-based inorganic solid electrolyte material (for example, the manufacturing company, the production lot, or the production method), is changed, the lithium ion conductivity of the obtained sulfide-based inorganic solid electrolyte material may be lowered.

The present invention has been made in view of the above circumstances, and provides a method for producing a sulfide-based inorganic solid electrolyte material, a method for producing a phosphorus sulfide composition, a method for evaluating a phosphorus sulfide composition, and a phosphorus sulfide composition, capable of stably obtaining a sulfide-based inorganic solid electrolyte material having improved lithium ion conductivity.

SOLUTION TO PROBLEM

The present inventors conducted a thorough investigation in order to achieve the above-described object. As a result, the present inventors found that by using a phosphorus sulfide composition having a specific X-ray profile as a raw material of a sulfide-based inorganic solid electrolyte material, a sulfide-based inorganic solid electrolyte material having improved lithium ion conductivity can be stably obtained, thereby completing the present invention.

The present inventors conducted a thorough investigation in order to provide a sulfide-based inorganic solid electrolyte material with improved lithium ion conductivity. As a result, the present inventors found in a case where a phosphorus sulfide composition in which the content of $P_2S_5$ and the degree of crystallization are each in a specific range is used as a raw material in the production of the sulfide-based inorganic solid electrolyte material, the lithium ion conductivity of the obtained sulfide-based inorganic solid electrolyte material can be improved, thereby completing the present invention.

According to the present invention, there are provided a method for producing a sulfide-based inorganic solid electrolyte material, a sulfide-based inorganic solid electrolyte material, a method for producing a phosphorus sulfide composition, a method for evaluating a phosphorus sulfide composition, a phosphorus sulfide composition, a raw material composition of a sulfide-based inorganic solid electrolyte material, a sulfide-based inorganic solid electrolyte, a sulfide-based inorganic solid electrolyte membrane, and a lithium ion battery shown below.

[1] A method for producing a sulfide-based inorganic solid electrolyte material, the method including:

a step of obtaining a sulfide-based inorganic solid electrolyte material in a vitreous state by mechanically processing a raw material composition of the sulfide-based inorganic solid electrolyte material including lithium sulfide and a phosphorus sulfide composition such that each component is vitrified in a chemical reaction,

in which the phosphorus sulfide composition has three or more peaks in a range of $2\theta = 22.5°$ or more and 24.5° or less in an X-ray diffraction analysis spectrum obtained by a method described in <X-ray diffraction analysis> below,

<X-ray diffraction analysis>

using an X-ray diffractometer, an X-ray diffraction analysis spectrum of the phosphorus sulfide composition is obtained by using CuK$\alpha$ rays as a radiation source under conditions of a voltage of 40 kV, a current of 40 mA, a divergence slit of 1°, a divergence slit vertical limit of 10 mm, a scattering slit of 1°, a receiving slit of 0.3 mm, a measurement start angle of 3°, a measurement end angle of 90°, and a scan speed of 0.2°/min, with the phosphorus sulfide composition set in an airtight sample holder filled with argon gas.

[2] The method for producing a sulfide-based inorganic solid electrolyte material according to [1], in which the phosphorus sulfide composition includes $P_2S_5$.

[3] The method for producing a sulfide-based inorganic solid electrolyte material according to [2], in which a content of the $P_2S_5$ in the phosphorus sulfide composition is 20% by mass or more.

[4] The method for producing a sulfide-based inorganic solid electrolyte material according to any one of [1] to [3], in which the phosphorus sulfide composition is powdery.

[5] The method for producing a sulfide-based inorganic solid electrolyte material according to any one of [1] to [4], in which the mechanical process includes a mechanochemical process.

[6] The method for producing a sulfide-based inorganic solid electrolyte material according to any one of [1] to [5], further including:

a step of heating the sulfide-based inorganic solid electrolyte material in the vitreous state in a range of 180°C or higher and 500°C or lower.

[7] The method for producing a sulfide-based inorganic solid electrolyte material according to any one of [1] to [6],

in which a lithium ion conductivity of the sulfide-based inorganic solid electrolyte material, which is measured by a method described in <Measurement of lithium ion conductivity> below, is $1.0 \times 10^{-3}$ S/cm or more,

<Measurement of lithium ion conductivity>

first, 110 mg of the sulfide-based inorganic solid electrolyte material is pressed under conditions of 270 MPa and 10 minutes to obtain a disk-shaped sample having a diameter of 9.5 mm and a thickness of 1 mm, and next, using an electrochemical measuring device, a lithium ion conductivity of the obtained disk-shaped sample is measured by an alternating current impedance method using a Li foil as an electrode under conditions of an applied voltage of 10 mV, a measurement frequency range of 0.1 Hz to 3 MHz, and a measurement temperature of 27°C.

[8] A sulfide-based inorganic solid electrolyte material obtained by the method for producing a sulfide-based inorganic solid electrolyte material according to any one of [1] to [7].

[9] A method for producing a phosphorus sulfide composition, the method including:

a step of selecting a phosphorus sulfide composition having three or more peaks in a range of $2\theta = 22.5°$ or more and 24.5° or less in an X-ray diffraction analysis spectrum obtained by a method described in <X-ray diffraction analysis> below,

<X-ray diffraction analysis>

using an X-ray diffractometer, an X-ray diffraction analysis spectrum of the phosphorus sulfide composition is obtained by using CuK$\alpha$ rays as a radiation source under conditions of a voltage of 40 kV, a current of 40 mA, a divergence slit of 1°, a divergence slit vertical limit of 10 mm, a scattering slit of 1°, a receiving slit of 0.3 mm, a measurement start angle of 3°, a measurement end angle of 90°, and a scan speed of 0.2°/min, with the phosphorus sulfide composition set in an airtight sample holder filled with argon gas.

[10] The method for producing a phosphorus sulfide composition according to [9], in which the phosphorus sulfide composition includes $P_2S_5$.

[11] The method for producing a phosphorus sulfide composition according to [10],
in which a content of the $P_2S_5$ in the phosphorus sulfide composition is 20% by mass or more.
[12] The method for producing a phosphorus sulfide composition according to any one of [9] to [11],
in which the phosphorus sulfide composition is powdery.
[13] A method for producing a sulfide-based inorganic solid electrolyte material, the method including:

a step of obtaining a phosphorus sulfide composition by using the method for producing a phosphorus sulfide composition according to any one of [9] to [12]; and
a step of obtaining a sulfide-based inorganic solid electrolyte material in a vitreous state by mechanically processing a raw material composition of the sulfide-based inorganic solid electrolyte material including lithium sulfide and the phosphorus sulfide composition such that each component is vitrified in a chemical reaction.

[14] The method for producing a sulfide-based inorganic solid electrolyte material according to [13],
in which the mechanical process includes a mechanochemical process.
[15] The method for producing a sulfide-based inorganic solid electrolyte material according to [13] or [14], further including:
a step of heating the sulfide-based inorganic solid electrolyte material in the vitreous state in a range of 180°C or higher and 500°C or lower.
[16] The method for producing a sulfide-based inorganic solid electrolyte material according to any one of [13] to [15],

in which a lithium ion conductivity of the sulfide-based inorganic solid electrolyte material, which is measured by a method described in <Measurement of lithium ion conductivity> below, is $1.0 \times 10^{-3}$ S/cm or more,
<Measurement of lithium ion conductivity>
first, 110 mg of the sulfide-based inorganic solid electrolyte material is pressed under conditions of 270 MPa and 10 minutes to obtain a disk-shaped sample having a diameter of 9.5 mm and a thickness of 1 mm, and next, using an electrochemical measuring device, a lithium ion conductivity of the obtained disk-shaped sample is measured by an alternating current impedance method using a Li foil as an electrode under conditions of an applied voltage of 10 mV, a measurement frequency range of 0.1 Hz to 3 MHz, and a measurement temperature of 27°C.

[17] A sulfide-based inorganic solid electrolyte material obtained by the method for producing a sulfide-based inorganic solid electrolyte material according to any one of [13] to [16].
[18] A method for evaluating a phosphorus sulfide composition, the method including:

a step of determining that a phosphorus sulfide composition having three or more peaks in a range of $2\theta = 22.5°$ or more and 24.5° or less in an X-ray diffraction analysis spectrum obtained by a method described in <X-ray diffraction analysis> below is acceptable,
<X-ray diffraction analysis>
using an X-ray diffractometer, an X-ray diffraction analysis spectrum of the phosphorus sulfide composition is obtained by using CuKα rays as a radiation source under conditions of a voltage of 40 kV, a current of 40 mA, a divergence slit of 1°, a divergence slit vertical limit of 10 mm, a scattering slit of 1°, a receiving slit of 0.3 mm, a measurement start angle of 3°, a measurement end angle of 90°, and a scan speed of 0.2°/min, with the phosphorus sulfide composition set in an airtight sample holder filled with argon gas.

[19] The method for evaluating a phosphorus sulfide composition according to [18],
in which the phosphorus sulfide composition includes $P_2S_5$.
[20] The method for evaluating a phosphorus sulfide composition according to [19],
in which a content of the $P_2S_5$ in the phosphorus sulfide composition is 20% by mass or more.
[21] The method for evaluating a phosphorus sulfide composition according to any one of [18] to [20],
in which the phosphorus sulfide composition is powdery.
[22] A phosphorus sulfide composition for a sulfide-based inorganic solid electrolyte material, the phosphorus sulfide composition including:

at least $P_2S_5$ and $P_4S_9$,
in which, in a case where a total content of $P_2S_5$, $P_4S_9$, $P_4S_7$, and $P_4S_3$ in the phosphorus sulfide composition is 100% by mass,
a content of the $P_2S_5$ calculated from a solid $^{31}$P-NMR spectrum is 30% by mass or more and 60% by mass or less, and
a degree of crystallization calculated from a spectrum obtained by X-ray diffraction using CuKα rays as a radiation source is 40% or more and 70% or less.

[23] The phosphorus sulfide composition according to [22],
in which a content of the $P_4S_9$ calculated from the solid $^{31}$P-NMR spectrum is 40% by mass or more and 70% by mass or less.
[24] The phosphorus sulfide composition according to [22] or [23],
in which a total content of the $P_2S_5$ and the $P_4S_9$ is 90% by mass or more.
[25] The phosphorus sulfide composition according to any one of [22] to [24],
in which in a DSC curve of the phosphorus sulfide composition, which is obtained by measurement with a differential scanning calorimeter, an endothermic peak is observed in a temperature range of 280°C or higher and 300°C or lower, and an amount of heat of fusion of the endothermic peak is 60 J/g or higher and 90 J/g or lower.
[26] The phosphorus sulfide composition according to any one of [22] to [25],
in which the phosphorus sulfide composition is powdery.
[27] A raw material composition of a sulfide-based inorganic solid electrolyte material, the raw material composition including:

the phosphorus sulfide composition according to any one of [22] to [26]; and
lithium sulfide.

[28] A method for producing a sulfide-based inorganic solid electrolyte material, the method including:
a step of mechanically processing the raw material composition of the sulfide-based inorganic solid electrolyte material according to [27].
[29] A sulfide-based inorganic solid electrolyte material including:
a mechanically processed product of the raw material composition of the sulfide-based inorganic solid electrolyte material according to [27].
[30] A sulfide-based inorganic solid electrolyte including:
the sulfide-based inorganic solid electrolyte material according to any one of [8], [17], and [29].
[31] A sulfide-based inorganic solid electrolyte membrane including:
the sulfide-based inorganic solid electrolyte according to [30] as a main component.
[32] A lithium ion battery including:

a positive electrode including a positive electrode active material layer;
an electrolyte layer; and
a negative electrode including a negative electrode active material layer,
in which at least one of the positive electrode active material layer, the electrolyte layer, and the negative electrode active material layer includes the sulfide-based inorganic solid electrolyte material according to any one of [8], [17], and [29].

ADVANTAGEOUS EFFECTS OF INVENTION

According to the present invention, it is possible to provide a method for producing a sulfide-based inorganic solid electrolyte material, a method for producing a phosphorus sulfide composition, a method for evaluating a phosphorus sulfide composition, and a phosphorus sulfide composition, capable of stably obtaining a sulfide-based inorganic solid electrolyte material having improved lithium ion conductivity.

BRIEF DESCRIPTION OF THE DRAWINGS

[FIG. 1] A cross-sectional view showing an example of a structure of a lithium ion battery according to the present embodiment.
[FIG. 2] A graph showing X-ray diffraction analysis spectra of phosphorus sulfide compositions used in Examples and Comparative Examples.
[FIG. 3] An enlarged view showing X-ray diffraction analysis spectra of the phosphorus sulfide compositions used in Examples and Comparative Examples in a range of $2\theta = 20°$ to $30°$.
[FIG. 4] A diagram showing an X-ray diffraction analysis spectrum for describing a method for calculating a degree of crystallization of a phosphorus sulfide composition according to a third embodiment (peak separation method)e
[FIG. 5] A diagram for describing a baseline used when calculating an amount of heat of fusion of an endothermic peak.

DESCRIPTION OF EMBODIMENTS

Hereinafter, an embodiment of the present invention will be described using the drawings. In all the drawings, the same components are represented by common reference numerals, and the description thereof will not be repeated. In addition, the figures are schematic views and do not correspond to the actual dimensional ratios. Unless specified otherwise, a numerical range "A to B" represents A or more and B or less. Unless otherwise specified, the term "present embodiment" means an embodiment including all of the first to third embodiments.

<<First Embodiment>>

A method for producing a sulfide-based inorganic solid electrolyte material and a sulfide-based inorganic solid electrolyte material according to a first embodiment will be described.

[Method for Producing Sulfide-Based Inorganic Solid Electrolyte Material]

The method for producing a sulfide-based inorganic solid electrolyte material according to the first embodiment includes a step of obtaining a sulfide-based inorganic solid electrolyte material in a vitreous state by mechanically processing a raw material composition of the sulfide-based inorganic solid electrolyte material including lithium sulfide and a phosphorus sulfide composition such that each component is vitrified in a chemical reaction. In the phosphorus sulfide composition according to the first embodiment, in an X-ray diffraction analysis spectrum obtained by the method described in the following <X-ray Diffraction Analysis>, three or more peaks are present in a range of $2\theta = 22.5°$ or more and $24.5°$ or less.

<X-Ray Diffraction Analysis>

Using an X-ray diffractometer, an X-ray diffraction analysis spectrum of the phosphorus sulfide composition is obtained by using CuK$\alpha$ rays as a radiation source under conditions of a voltage of 40 kV, a current of 40 mA, a divergence slit of 1°, a divergence slit vertical limit of 10 mm, a scattering slit of 1°, a receiving slit of 0.3 mm, a measurement start angle of 3°, a measurement end angle of 90°, and a scan speed of 0.2°/min, with the phosphorus sulfide composition set in an airtight sample holder filled with argon gas.

According to the investigation conducted by the present inventors, it has been clarified that in a case where the kind of phosphorus sulfide which is one of the raw materials of the sulfide-based inorganic solid electrolyte material (for example, the manufacturing company, the production lot, or the production method), is changed, the lithium ion conductivity of the obtained sulfide-based inorganic solid electrolyte material may be lowered.

Therefore, the present inventors conducted a thorough investigation in order to provide a production method capable of stably obtaining a sulfide-based inorganic solid electrolyte material with improved lithium ion conductivity. As a result, the present inventors found that by using a phosphorus sulfide composition in which three or more peaks are observed in a range of $2\theta = 22.5°$ or more and $24.5°$ or less in an X-ray diffraction analysis spectrum as a raw material of the sulfide-based inorganic solid electrolyte material, it is possible to suppress a decrease in lithium ion conductivity of the obtained sulfide-based inorganic solid electrolyte material, thereby completing the present invention.

That is, according to the method for producing a sulfide-based inorganic solid electrolyte material according to the first embodiment, it is possible to stably obtain a sulfide-based inorganic solid electrolyte material having improved lithium ion conductivity by using a phosphorus sulfide composition in which three or more peaks are observed in a range of $2\theta = 22.5°$ or more and $24.5°$ or less in an X-ray diffraction analysis spectrum as a raw material of the sulfide-based inorganic solid electrolyte material.

The method for producing a sulfide-based inorganic solid electrolyte material according to the first embodiment includes the following step (A), and may further include a step (B) and a step (C). The step (C) may be carried out between the step (A) and the step (B) or after the step (B).

Step (A): a step of obtaining a sulfide-based inorganic solid electrolyte material in a vitreous state by mechanically processing a raw material composition of the sulfide-based inorganic solid electrolyte material including lithium sulfide and a phosphorus sulfide composition such that each component is vitrified in a chemical reaction

Step (B): a step of obtaining a sulfide-based inorganic solid electrolyte material in a glass ceramic state by heating the obtained sulfide-based inorganic solid electrolyte material in the vitreous state such that at least a part of the sulfide-based inorganic solid electrolyte material is crystallized

Step (C): a step of crushing, classifying, or granulating the obtained sulfide-based inorganic solid electrolyte material in the vitreous or glass ceramic state

(Step (A))

First, a raw material composition of a sulfide-based inorganic solid electrolyte material is prepared. The raw material composition of the sulfide-based inorganic solid electrolyte material includes lithium sulfide and a phosphorus sulfide composition, and may further include lithium nitride as necessary.

Here, a mixing ratio between the respective raw materials in the raw material composition is adjusted such that the obtained sulfide-based inorganic solid electrolyte material has a desired composition ratio.

A method of mixing the respective raw materials is not particularly limited as long as it is a mixing method capable of uniformly mixing the respective raw materials. For example, the raw materials can be mixed using a ball mill, a beads mill, a vibrating mill, an impact crushing device, a mixer (for example, a pug mixer, a ribbon mixer, a tumbler mixer, a drum mixer, or a V-type mixer), a kneader, a twin-screw kneader, an air flow grinder, a crusher, a rotary blade crusher, or the like.

Mixing conditions such as a stirring rate, a processing time, a temperature, a reaction pressure, or a gravitational acceleration applied to the mixture during the mixing of the respective raw materials can be appropriately determined depending on the amount of the mixture processed.

In the step (A), by mechanically processing the raw material composition of the sulfide-based inorganic solid electrolyte material including lithium sulfide and a phosphorus sulfide composition, each component is vitrified in a chemical reaction to obtain a sulfide-based inorganic solid electrolyte material in a vitreous state.

Here, the mechanical process refers to a process of causing two or more kinds of inorganic compounds to mechanically collide with each other to be vitrified in a chemical reaction, for example, a mechanochemical process. Here, the mechanochemical process refers to a method of vitrifying a target composition while applying a mechanical energy such as a shear force or an impact force.

In addition, in the step (A), it is preferable that the mechanochemical process is a dry mechanochemical process from the viewpoint of easily realizing the process in an environment where water or oxygen is removed at a high level.

By using the mechanochemical process, the respective raw materials can be mixed while crushing the raw materials into fine particles. Therefore, the contact area of the respective raw materials can be increased. As a result, the reaction of the respective raw materials can be accelerated. The sulfide-based inorganic solid electrolyte material of the first embodiment can be obtained with higher efficiency.

Here, the mechanochemical process refers to a method of vitrifying a mixing target while applying a mechanical energy such as a shear force, an impact force, or a centrifugal force. Examples of a device for vitrification (hereinafter, referred to as "vitrification device") in the mechanochemical process include: a crusher and disperser such as a ball mill, a beads mill, a vibrating mill, a turbo mill, a mechano - fusion, a disc mill, or a roll mill; a rotation and impact crushing device including a mechanism as a combination of rotation (shearing stress) and impact (compressive stress) represented by a rock drill, a vibration drill, or an impact driver; a high-pressure grinding roll; and a vertical mill such as a roller vertical mill or a ball vertical mill.

In particular, from the viewpoint of efficiently generating a very high impact energy, a ball mill or a beads mill is preferable, and a ball mill is more preferable.

In addition, from the viewpoint of obtaining excellent continuous productivity, for example, a roll mill; a rotation and impact crushing device including a mechanism as a combination of rotation (shearing stress) and impact (compressive stress) represented by a rock drill, a vibration drill, or an impact driver; a high-pressure grinding roll; or a vertical mill such as a roller vertical mill or a ball vertical mill is preferable.

Mixing conditions such as a rotation speed, a processing time, a temperature, a reaction pressure, or a gravitational acceleration applied to the raw material composition during the mechanical process of the raw material composition of the sulfide-based inorganic solid electrolyte material can be appropriately determined based on the kind of the raw material composition or the amount thereof processed. In general, as the rotation speed increases, the glass production rate increases, and as the processing time increases, the glass conversion rate increases.

Typically, when X-ray diffraction analysis is performed using CuK$\alpha$ rays as a radiation source, in a case where a diffraction peak derived from the raw material is lost or decreases, it can be determined that the raw material composition of the sulfide-based inorganic solid electrolyte material is vitrified and a desired sulfide-based inorganic solid electrolyte material is obtained.

It is preferable that the mechanical process in the step (A) is carried out in an inert gas atmosphere. As a result, deterioration (for example, oxidation) of the sulfide-based inorganic solid electrolyte material can be prevented.

Examples of the inert gas include argon gas, helium gas, and nitrogen gas. In order to prevent impurities from being mixed in a product, it is preferable that the purity of the inert gas is as high as possible. In addition, in order to avoid contact with water, the dew point is preferably -70°C or lower and more preferably -80°C or lower.

Here, in the step (A), it is preferable that the vitrification process is performed until the lithium ion conductivity of the sulfide-based inorganic solid electrolyte material measured using an alternating current impedance method under measurement conditions of 27.0°C, an applied voltage of 10 mV, and a measurement frequency range of 0.1 Hz to 3 MHz is preferably $1.0 \times 10^{-4}$ S·cm$^{-1}$ or higher, more preferably $2.0 \times 10^{-4}$ S·cm$^{-1}$ or higher, still more preferably $3.0 \times 10^{-4}$ S·cm$^{-1}$

or higher, and even still more preferably $4.0 \times 10^{-4}$ S·cm$^{-1}$ or higher. As a result, a sulfide-based inorganic solid electrolyte material having further improved lithium ion conductivity can be obtained.

<Phosphorus Sulfide Composition>

In the X-ray diffraction analysis spectrum obtained by the method described in <X-Ray Diffraction Analysis> above, the phosphorus sulfide composition of the first embodiment has three or more peaks in a range of $2\theta = 22.5°$ or more and 24.5° or less, and preferably has three peaks.

The phosphorus sulfide composition according to the first embodiment includes, for example, one or two or more selected from the group consisting of $P_2S_5$ (also represented by $P_4S_{10}$), $P_4S_9$, $P_4S_7$, $P_4S_3$, and $P_4S_5$, preferably one or two selected from the group consisting of $P_2S_5$ and $P_4S_9$, and more preferably $P_2S_5$ and $P_4S_9$.

In a case where the total content of the phosphorus sulfide composition according to the first embodiment is 100% by mass, the content of $P_2S_5$ in the phosphorus sulfide composition according to the first embodiment is preferably 20% by mass or more, more preferably 30% by mass or more, still more preferably 35% by mass or more, and even still more preferably 40% by mass or more, and is preferably 80% by mass or less, more preferably 70% by mass or less, still more preferably 60% by mass or less, even still more preferably 55% by mass or less, and even still more preferably 50% by mass or less, from the viewpoint that the lithium ion conductivity of the sulfide-based inorganic solid electrolyte material according to the first embodiment can be further improved.

Here, the content of $P_2S_5$ in the phosphorus sulfide composition according to the first embodiment can be calculated from the solid $^{31}$P-NMR spectrum.

In a case where the total content of the phosphorus sulfide composition according to the first embodiment is 100% by mass, the content of $P_4S_9$ in the phosphorus sulfide composition of the first embodiment is preferably 20% by mass or more, more preferably 30% by mass or more, still more preferably 40% by mass or more, even more preferably 45% by mass or more, and even still more preferably 50% by mass or more, and is preferably 80% by mass or less, more preferably 70% by mass or less, still more preferably 65% by mass or less, and even still more preferably 60% by mass or less, from the viewpoint that the lithium ion conductivity of the sulfide-based inorganic solid electrolyte material of the first embodiment can be further improved.

Here, the content of $P_4S_9$ in the phosphorus sulfide composition according to the first embodiment can be calculated from the solid $^{31}$P-NMR spectrum.

The phosphorus sulfide composition according to the first embodiment preferably includes $P_2S_5$ and $P_4S_9$. In the phosphorus sulfide composition according to the first embodiment, in a case where the entire phosphorus sulfide composition of the first embodiment is 100% by mass, the total content of $P_2S_5$ and $P_4S_9$ is preferably 90% by mass or more, more preferably 95% by mass or more, still more preferably 97% by mass or more, even more preferably 98% by mass or more, and even still more preferably 99% by mass or more, from the viewpoint that the lithium ion conductivity of the sulfide-based inorganic solid electrolyte material of the first embodiment can be further improved. The upper limit of the total content of $P_2S_5$ and $P_4S_9$ in the phosphorus sulfide composition according to the first embodiment is not particularly limited, but, for example, may be 100% by mass or less.

The solid $^{31}$P-NMR spectrum can be measured, for example, by the following method.

First, in a glove box purged with $N_2$ gas, a measurement sample tube having a diameter of 3.2 mm is filled with a test sample and is spun (Magic Angle Spinning: MAS) in a state where it is inclined at a magic angle (54.7 degrees) with respect to an external magnetic field to perform the measurement under the following conditions.

Device: JNM-ECA-600 manufactured by JEOL RESONANCE Inc.
Observation frequency: 242.95 MHz
Pulse width: 90° pulse
Pulse waiting time: 2800 seconds
Number of integrations: 64 times
Measurement mode: a single pulse method
MAS rate: 12 kHz
Reference material: $(NH_4)_2HPO_4 \cdot 1.33$ ppm

Regarding peaks detected in the $^{31}$P-NMR spectrum of the test sample, waveform separation using a Gaussian function based on the following peak assignment is performed to calculate an integrated value of each of the peaks with reference to Reference Document 1 "Hellmut Eckert, Cheryl S. Liang and Galen D. Stucky: $^{31}$P magic angle spinning NMR of crystalline phosphorous sulfides. Correlation of $^{31}$P chemical shielding tensors with local environments, J. Phys. Chem, 1989, 93, 452-457". The integrated value of the peak derived from each of the component is proportional to the molar number of phosphorus included. Therefore, a content ratio can be calculated based on the obtained integrated value and the molecular weight of each of the components.

The chemical shift of $P_2S_5$ is 40 to 52 ppm, the chemical shift of $P_4S_9$ is 52 to 70 ppm, the chemical shift of $P_4S_7$ is 80 to 90 ppm, 90 to 100 ppm, or 110 to 115 ppm, and the chemical shift of $P_4S_3$ is 80 to 90 ppm or 90 to 100 ppm.

Examples of the properties of the phosphorus sulfide composition according to the first embodiment include powdery. Since the sulfide-based inorganic solid electrolyte material according to the first embodiment is generally produced by a dry method, in a case where the properties of the phosphorus sulfide composition of the first embodiment are powdery, the production of the sulfide-based inorganic solid electrolyte material is further facilitated.

<Lithium Sulfide>

The lithium sulfide used as a raw material is not particularly limited, and a commercially available lithium sulfide may be used. For example, lithium sulfide obtained by reaction of lithium hydroxide and hydrogen sulfide may also be used. From the viewpoint of obtaining the high-purity sulfide-based inorganic solid electrolyte material and suppressing a side reaction, it is preferable that lithium sulfide having little impurities is used.

Here, in the first embodiment, examples of the lithium sulfide include lithium polysulfide.

<Lithium Nitride>

Lithium nitride may be used as a raw material. Here, nitrogen in the lithium nitride is discharged to the outside of the system as $N_2$. Therefore, by using lithium nitride as a raw material, only the Li composition can be increased with respect to the sulfide-based inorganic solid electrolyte material including Li, P, and S as constituent elements.

The lithium nitride according to the first embodiment is not particularly limited, and a commercially available lithium nitride (for example, $Li_3N$) may be used. For example, lithium nitride obtained by reaction of metallic lithium (for example, Li foil) and nitrogen gas may also be used.

In the method for producing the sulfide-based inorganic solid electrolyte material according to the first embodiment, from the viewpoint of obtaining a high-purity solid electrolyte material and the viewpoint of suppressing a side reaction, it is preferable that lithium nitride having little impurities is used.

Here, the ratio of each raw material in the raw material composition can be adjusted such that the sulfide-based inorganic solid electrolyte material has a desired compositional ratio.

(Step (B))

In the step (B), the obtained sulfide-based inorganic solid electrolyte material in the vitreous state is heated and a part of the sulfide-based inorganic solid electrolyte material is crystallized to obtain a sulfide-based inorganic solid electrolyte material in a glass ceramic state. As a result, a sulfide-based inorganic solid electrolyte material having further improved lithium ion conductivity can be obtained.

That is, from the viewpoint of obtaining excellent lithium ion conductivity, it is preferable that the sulfide-based inorganic solid electrolyte material according to the first embodiment is in a glass ceramic state (crystallized glass state). Here, the glass ceramic is a material in which at least a part of an inorganic compound is crystallized, and is also called crystallized glass.

The heating process temperature in the step (B) is not particularly limited, but from the viewpoint of further improving the lithium ion conductivity of the sulfide-based inorganic solid electrolyte material according to the first embodiment, the temperature is preferably 180°C or higher, more preferably 200°C or higher, and still more preferably 220°C or higher, and the temperature is preferably 500°C or lower, more preferably 450°C or lower, still more preferably 400°C or lower, and even still more preferably 350°C or lower.

The heating processing time in the step (B) is not particularly limited as long as it is a time in which a desired sulfide-based inorganic solid electrolyte material in a glass ceramic state is obtained, but from the viewpoint of further improving the lithium ion conductivity of the sulfide-based inorganic solid electrolyte material according to the first embodiment, the time is preferably 0.5 hours or more and more preferably 1 hour or more, and the time is preferably 24 hours or less and more preferably 3 hours or less.

In addition, the method of the heating process in the step (B) is not particularly limited, and examples thereof include a method using a heating furnace or a baking furnace. Conditions such as a temperature or a time during heating can be appropriately adjusted in order to optimize properties of the sulfide-based inorganic solid electrolyte material according to the first embodiment.

In addition, from the viewpoint of preventing deterioration (for example, oxidation) of the sulfide-based inorganic solid electrolyte material, it is preferable that the heating process in the step (B) is carried out in an inert gas atmosphere.

Examples of the inert gas when the sulfide-based inorganic solid electrolyte material in the vitreous state is heated include argon gas, helium gas, and nitrogen gas. In order to prevent impurities from being mixed in a product, it is preferable that the purity of the inert gas is as high as possible. In addition, in order to avoid contact with water, the dew point is preferably -30°C or lower, more preferably - 70°C or lower, and still more preferably -80°C or lower. A method for introducing the inert gas into the mixed system is not particularly limited as long as it is a method capable of filling the mixed system with the inert gas atmosphere. Examples of the introduction method include a method of purging inert gas and a method of continuously introducing inert gas at a given flow rate.

(Step (C))

In the method for producing a sulfide-based inorganic solid electrolyte material according to the first embodiment, as necessary, a step (C) of crushing, classifying, or granulating the obtained sulfide-based inorganic solid electrolyte material in the vitreous or glass ceramic state may be further performed. For example, by crushing the sulfide-based inorganic solid electrolyte material into fine particles and adjusting the particle size thereof through a classification operation or a granulation operation, a sulfide-based inorganic solid electrolyte material having a desired particle size can be obtained. The above-described crushing method is not particularly limited, and a well-known crushing method such as a mixer, an air flow grinder, a mortar, a tumbling mill, or a coffee mill can be used. In addition, the above-described classification method is not particularly limited, and a well-known method such as a sieve can be used.
From the viewpoint of avoiding contact with water in air, it is preferable that crushing or classification is performed in an inert gas atmosphere or a vacuum atmosphere.

[Sulfide-Based Inorganic Solid Electrolyte Material]

The sulfide-based inorganic solid electrolyte material according to the first embodiment can be obtained by the method for producing a sulfide-based inorganic solid electrolyte material according to the first embodiment.
The sulfide-based inorganic solid electrolyte material according to the first embodiment can be used for any application where lithium ion conductivity is required, and the sulfide-based inorganic solid electrolyte material can be preferably used for a lithium ion battery and more preferably used for an all-solid state lithium ion battery.
From the viewpoint of further improving the input and output characteristics of the lithium ion battery, the lithium ion conductivity of the sulfide-based inorganic solid electrolyte material according to the first embodiment, which is measured by a method described in <Measurement of Lithium Ion Conductivity> below, is preferably $1.0 \times 10^{-3}$ S/cm or more, more preferably $1.1 \times 10^{-3}$ S/cm or more, still more preferably $1.2 \times 10^{-3}$ S/cm or more, even more preferably $1.3 \times 10^{-3}$ S/cm or more, and even still more preferably $1.4 \times 10^{-3}$ S/cm or more.
In addition, the lithium ion conductivity of the sulfide-based inorganic solid electrolyte material of the first embodiment is not particularly limited, but, for example, may be $1.0 \times 10^{-2}$ S/cm or less, $5.0 \times 10^{-3}$ S/cm or less, $3.0 \times 10^{-3}$ S/cm or less, or $2.0 \times 10^{-3}$ S/cm or less.

<Measurement of Lithium Ion Conductivity>

First, 110 mg of the sulfide-based inorganic solid electrolyte material is pressed under conditions of 270 MPa and 10 minutes to obtain a disk-shaped sample having a diameter of 9.5 mm and a thickness of 1 mm.
Next, using an electrochemical measuring device, the lithium ion conductivity of the obtained disk-shaped sample is measured by an alternating current impedance method using a Li foil as an electrode under conditions of an applied voltage of 10 mV, a measurement frequency range of 0.1 Hz to 3 MHz, and a measurement temperature of 27°C.
The lithium ion conductivity can be measured, for example, with an electrochemical measuring device such as a potentiostat/galvanostat SP-300 manufactured by Bio-Logic Sciences Instruments.
It is preferable that the sulfide-based inorganic solid electrolyte material of the first embodiment has good electrochemical stability. Here, the electrochemical stability refers to, for example, a property in which a material is less likely to be oxidized and reduced in a wide voltage range. More specifically, in the sulfide-based inorganic solid electrolyte material according to the first embodiment, the maximum value of the oxidative decomposition current of the sulfide-based inorganic solid electrolyte material measured under the conditions of a temperature of 25°C, a sweep voltage range of 0 to 5 V, and a voltage sweep rate of 5 mV/sec is preferably 0.50 μA or less, more preferably 0.20 μA or less, still more preferably 0.10 μA or less, even more preferably 0.05 μA or less, and even still more preferably 0.03 μA or less.
When the maximum value of the oxidative decomposition current of the sulfide-based inorganic solid electrolyte material is the above-described upper limit value or lower, the oxidative decomposition of the sulfide-based inorganic solid electrolyte material in the lithium ion battery can be suppressed, which is preferable.
The lower limit value of the maximum value of the oxidative decomposition current of the sulfide-based inorganic solid electrolyte material is not particularly limited and may be, for example, 0.0001 μA or higher.
The sulfide-based inorganic solid electrolyte material according to the first embodiment can be used for any application where lithium ion conductivity is required. Among these, the sulfide-based inorganic solid electrolyte material according to the first embodiment is preferably used for a lithium ion battery. More specifically, the sulfide-based inorganic solid electrolyte material is preferably used for a positive electrode active material layer, a negative electrode active material layer, an electrolyte layer, and the like in a lithium ion battery. Further, the sulfide-based inorganic solid electrolyte material according to the first embodiment is suitably used for a positive electrode active material layer, a negative electrode active material layer, a solid electrolyte layer, or the like forming an all-solid-state lithium ion battery, and is more suitably used for a solid electrolyte layer forming an all-solid-state lithium ion battery.

Examples of the all-solid-state lithium ion battery to which the sulfide-based inorganic solid electrolyte material according to the first embodiment is applied include an all-solid-state lithium ion battery in which a positive electrode, a solid electrolyte layer, and a negative electrode are stacked in this order.

From the viewpoint of further improving the electrochemical stability and the stability and the handling properties in water or air, it is preferable that the sulfide-based inorganic solid electrolyte material according to the first embodiment includes Li, P, and S as constituent elements.

In addition, in the sulfide-based inorganic solid electrolyte material according to the first embodiment, from the viewpoint of improving the performance balance of lithium ion conductivity and electrochemical stability, and the viewpoint of further improving the stability and the handling properties in water or air, the molar ratio Li/P of the content of Li to the content of P in the sulfide-based inorganic solid electrolyte material according to the first embodiment is preferably 1.0 or more and 5.0 or less, more preferably 2.0 or more and 4.0 or less, still more preferably 2.5 or more and 3.8 or less, even more preferably 2.7 or more and 3.6 or less, yet still more preferably 2.8 or more and 3.5 or less, yet even more preferably 2.9 or more and 3.4 or less, and even still more preferably 3.0 or more and 3.3 or less, and the molar ratio S/P of the content of S to the content of P is preferably 2.0 or more and 6.0 or less, more preferably 3.0 or more and 5.0 or less, still more preferably 3.5 or more and 4.5 or less, even more preferably 3.8 or more and 4.2 or less, yet still more preferably 3.9 or more and 4.1 or less, and even still more preferably 4.0.

From the viewpoint of improving the performance balance of lithium ion conductivity and electrochemical stability, and the viewpoint of further improving the stability and handling properties in water or air, the sulfide-based inorganic solid electrolyte material according to the first embodiment preferably includes one or two selected from the group consisting of $Li_3PS_4$ and $Li_{10}P_3S_{12}$.

Here, the contents of Li, P, and S in the sulfide-based inorganic solid electrolyte material according to the first embodiment can be obtained by, for example, ICP Emission Spectroscopy or X-ray analysis.

Examples of the shape of the sulfide-based inorganic solid electrolyte material according to the first embodiment include a particle shape.

The sulfide-based inorganic solid electrolyte material having a particle shape according to the first embodiment is not particularly limited, and an average particle size $d_{50}$ in a weight average particle size distribution measured using a laser diffraction scattering particle size distribution method is preferably 1 $\mu$m or more and 100 $\mu$m or less, more preferably 3 $\mu$m or more and 80 $\mu$m or less, still more preferably 5 $\mu$m or more and 60 $\mu$m or less.

By adjusting the average particle size $d_{50}$ of the sulfide-based inorganic solid electrolyte material to be in the above-described range, the lithium ion conductivity can be further improved while maintaining excellent handling properties.

<<Second Embodiment>>

A method for producing a phosphorus sulfide composition, a method for evaluating a phosphorus sulfide composition, and a sulfide-based inorganic solid electrolyte material according to a second embodiment will be described.

[Methods for Producing and Evaluating Phosphorus Sulfide Composition]

The method for producing a phosphorus sulfide composition according to the second embodiment includes a step of selecting a phosphorus sulfide composition having three or more peaks in a range of $2\theta = 22.5°$ or more and 24.5° or less in an X-ray diffraction analysis spectrum obtained by the method described in <X-Ray Diffraction Analysis> below.

<X-Ray Diffraction Analysis>

Using an X-ray diffractometer, an X-ray diffraction analysis spectrum of the phosphorus sulfide composition is obtained by using $CuK\alpha$ rays as a radiation source under conditions of a voltage of 40 kV, a current of 40 mA, a divergence slit of 1°, a divergence slit vertical limit of 10 mm, a scattering slit of 1°, a receiving slit of 0.3 mm, a measurement start angle of 3°, a measurement end angle of 90°, and a scan speed of 0.2°/min, with the phosphorus sulfide composition set in an airtight sample holder filled with argon gas.

In addition, the method for evaluating a phosphorus sulfide composition according to the second embodiment includes a step of determining that the phosphorus sulfide composition having three or more peaks in a range of $2\theta = 22.5°$ or more and 24.5° or less in the X-ray diffraction analysis spectrum obtained by the method described in <X-Ray Diffraction Analysis> above is acceptable.

According to the investigation conducted by the present inventors, it has been clarified that in a case where the kind of phosphorus sulfide which is one of the raw materials of the sulfide-based inorganic solid electrolyte material (for example, the manufacturing company, the production lot, or the production method), is changed, the lithium ion conductivity of the obtained sulfide-based inorganic solid electrolyte material may be lowered.

Therefore, the present inventors conducted a thorough investigation in order to provide a production method capable of stably obtaining a sulfide-based inorganic solid electrolyte material with improved lithium ion conductivity. As a result, the present inventors found that by using a phosphorus sulfide composition in which three or more peaks are observed in a range of $2\theta = 22.5°$ or more and $24.5°$ or less in an X-ray diffraction analysis spectrum as a raw material of the sulfide-based inorganic solid electrolyte material, it is possible to suppress a decrease in lithium ion conductivity of the obtained sulfide-based inorganic solid electrolyte material, thereby completing the present invention.

That is, according to the second embodiment, by selecting and using, as a raw material of the sulfide-based inorganic solid electrolyte material, a phosphorus sulfide composition in which three or more peaks are observed in a range of $2\theta = 22.5°$ or more and $24.5°$ or less in the X-ray diffraction analysis spectrum, a sulfide-based inorganic solid electrolyte material having improved lithium ion conductivity can be stably obtained.

In the method for producing a phosphorus sulfide composition and the method for evaluating a phosphorus sulfide composition according to the second embodiment, a raw material composition of phosphorus sulfide is prepared. The raw material composition of the phosphorus sulfide used as the raw material is not particularly limited, and a commercially available phosphorus sulfide may be used as it is, or a raw material composition of phosphorus sulfide obtained by using a generally known method for producing phosphorus sulfide may be used. It is preferable to use phosphorus sulfide for a sulfide-based inorganic solid electrolyte material.

Next, in the method for producing a phosphorus sulfide composition according to the second embodiment, the phosphorus sulfide composition having three or more peaks in a range of $2\theta = 22.5°$ or more and $24.5°$ or less in the X-ray diffraction analysis spectrum obtained by the method described in <X-Ray Diffraction Analysis> above is selected from the prepared raw material composition of phosphorus sulfide.

In addition, in the method for evaluating a phosphorus sulfide composition according to the second embodiment, the phosphorus sulfide composition is determined to be acceptable in a case where three or more peaks are present in a range of $2\theta = 22.5°$ or more and $24.5°$ or less in the X-ray diffraction analysis spectrum obtained by the method described in <X-Ray Diffraction Analysis> above from the prepared raw material composition of the phosphorus sulfide.

In the X-ray diffraction analysis spectrum obtained by the method described in <X-Ray Diffraction Analysis> above, the phosphorus sulfide composition of the second embodiment has three or more peaks in a range of $2\theta = 22.5°$ or more and $24.5°$ or less, and preferably has three peaks.

The preferable aspect of the phosphorus sulfide composition according to the second embodiment is the same as the preferable aspect of the phosphorus sulfide composition of the first embodiment.

[Method for Producing Sulfide-Based Inorganic Solid Electrolyte Material]

The method for producing a sulfide-based inorganic solid electrolyte material according to the second embodiment includes a step of obtaining a phosphorus sulfide composition by using the method for producing a phosphorus sulfide composition according to the second embodiment, and a step of obtaining a sulfide-based inorganic solid electrolyte material in a vitreous state by a mechanically processing a raw material composition of the sulfide-based inorganic solid electrolyte material including lithium sulfide and the phosphorus sulfide composition such that each component is vitrified in a chemical reaction.

That is, the method for producing a sulfide-based inorganic solid electrolyte material according to the second embodiment includes the following step (A) in addition to the step of obtaining a phosphorus sulfide composition by using the method for producing a phosphorus sulfide composition according to the second embodiment, and may further include a step (B) or a step (C). The step (C) may be carried out between the step (A) and the step (B) or after the step (B).

Step (A): a step of obtaining a sulfide-based inorganic solid electrolyte material in a vitreous state by mechanically processing a raw material composition of the sulfide-based inorganic solid electrolyte material including lithium sulfide and the phosphorus sulfide composition obtained by the method for producing a phosphorus sulfide composition according to the second embodiment such that each component is vitrified in a chemical reaction
Step (B): a step of obtaining a sulfide-based inorganic solid electrolyte material in a glass ceramic state by heating the obtained sulfide-based inorganic solid electrolyte material in the vitreous state such that at least a part of the sulfide-based inorganic solid electrolyte material is crystallized
Step (C): a step of crushing, classifying, or granulating the obtained sulfide-based inorganic solid electrolyte material in the vitreous or glass ceramic state

(Step (A))

First, a raw material composition of a sulfide-based inorganic solid electrolyte material is prepared. The raw material composition of the sulfide-based inorganic solid electrolyte material includes lithium sulfide and the phosphorus sulfide composition obtained by the method for producing a phosphorus sulfide composition according to the second embodiment, and may further include lithium nitride as necessary.

Here, a mixing ratio between the respective raw materials in the raw material composition is adjusted such that the obtained sulfide-based inorganic solid electrolyte material has a desired composition ratio.

Other, the preferable aspect of the step (A) in the method for producing a sulfide-based inorganic solid electrolyte material according to the second embodiment is the same as the preferable aspect of the step (A) in the method for producing a sulfide-based inorganic solid electrolyte material according to the first embodiment. In addition, the preferable aspects of lithium sulfide and lithium nitride used as raw materials are also the same as the preferable aspects of lithium sulfide and lithium nitride in the method for producing a sulfide-based inorganic solid electrolyte material according to the first embodiment.

The preferable aspects of the step (B) and the step (C) in the method for producing a sulfide-based inorganic solid electrolyte material according to the second embodiment are the same as the preferable aspects of the step (B) and the step (C) in the method for producing a sulfide-based inorganic solid electrolyte material according to the first embodiment.

[Sulfide-Based Inorganic Solid Electrolyte Material]

The sulfide-based inorganic solid electrolyte material according to the second embodiment can be obtained by the method for producing a sulfide-based inorganic solid electrolyte material according to the second embodiment.

The preferable aspect of the sulfide-based inorganic solid electrolyte material according to the second embodiment is the same as the preferable aspect of the sulfide-based inorganic solid electrolyte material according to the first embodiment.

<<Third Embodiment>>

A phosphorus sulfide composition, a method for producing a sulfide-based inorganic solid electrolyte material, and a sulfide-based inorganic solid electrolyte material according to a third embodiment will be described.

[Phosphorus Sulfide Composition]

The phosphorus sulfide composition according to the third embodiment is a phosphorus sulfide composition for a sulfide-based inorganic solid electrolyte material including at least $P_2S_5$ and $P_4S_9$, in a case where a total content of $P_2S_5$, $P_4S_9$, $P_4S_7$, and $P_4S_3$ in the phosphorus sulfide composition is 100% by mass, a content of $P_2S_5$ calculated from a solid $^{31}P$-NMR spectrum is 30% by mass or more and 60% by mass or less, and a degree of crystallization calculated from a spectrum obtained by X-ray diffraction using CuK$\alpha$ rays as a radiation source is 40% or more and 70% or less.

According to the investigation conducted by the present inventors, it has been clarified that in a case where the kind of phosphorus sulfide which is one of the raw materials of the sulfide-based inorganic solid electrolyte material (for example, the manufacturing company, the production lot, or the production method), is changed, the lithium ion conductivity of the obtained sulfide-based inorganic solid electrolyte material may be lowered.

Therefore, the present inventors conducted a thorough investigation in order to provide a production method capable of stably obtaining a sulfide-based inorganic solid electrolyte material with improved lithium ion conductivity. As a result, the present inventors found that when a phosphorus sulfide composition in which the content of $P_2S_5$ calculated from the solid $^{31}P$-NMR spectrum and the degree of crystallization calculated from the spectrum obtained by X-ray diffraction using CuK$\alpha$ rays as a radiation source are each in a specific range is used as a raw material in the production of a sulfide-based inorganic solid electrolyte material, the lithium ion conductivity of the obtained sulfide-based inorganic solid electrolyte material can be improved, thereby completing the present invention.

That is, according to the third embodiment, by using, as a raw material of the sulfide-based inorganic solid electrolyte material, a phosphorus sulfide composition in which the content of $P_2S_5$ calculated from the solid $^{31}P$-NMR spectrum is 30% by mass or more and 60% by mass or less, and the degree of crystallization calculated from the spectrum obtained by X-ray diffraction using CuK$\alpha$ rays as a radiation source is 40% or more and 70% or less, a sulfide-based inorganic solid electrolyte material having improved lithium ion conductivity can be stably obtained.

The content of $P_2S_5$ in the phosphorus sulfide composition of the third embodiment is 30% by mass or more and 60% by mass or less, and in a case where the total content of the phosphorus sulfide composition according to the third embodiment is 100% by mass, from the viewpoint that the lithium ion conductivity of the sulfide-based inorganic solid electrolyte material according to the third embodiment can be further improved, the content of $P_2S_5$ is preferably 35% by mass or more, more preferably 38% by mass or more, and still more preferably 40% by mass or more, and is preferably 55% by mass or less, more preferably 52% by mass or less, and still more preferably 50% by mass or less.

Here, the content of $P_2S_5$ in the phosphorus sulfide composition according to the third embodiment can be calculated from the solid $^{31}$P-NMR spectrum.

In a case where the total content of the phosphorus sulfide composition according to the third embodiment is 100% by mass, from the viewpoint that the lithium ion conductivity of the sulfide-based inorganic solid electrolyte material according to the third embodiment can be further improved, the content of $P_4S_9$ in the phosphorus sulfide composition according to the third embodiment is preferably 40% by mass or more, more preferably 45% by mass or more, still more preferably 48% by mass or more, and even still more preferably 50% by mass or more, and is preferably 70% by mass or less, more preferably 65% by mass or less, still more preferably 62% by mass or less, and even still more preferably 60% by mass or less.

Here, the content of $P_4S_9$ in the phosphorus sulfide composition of the third embodiment can be calculated from the solid $^{31}$P-NMR spectrum.

The phosphorus sulfide composition according to the third embodiment includes at least $P_2S_5$ and $P_4S_9$. In the phosphorus sulfide composition according to the third embodiment, in a case where the total content of the phosphorus sulfide composition according to the third embodiment is 100% by mass, the total content of $P_2S_5$ and $P_4S_9$ is preferably 90% by mass or more, more preferably 95% by mass or more, still more preferably 97% by mass or more, even more preferably 98% by mass or more, and even still more preferably 99% by mass or more, from the viewpoint that the lithium ion conductivity of the sulfide-based inorganic solid electrolyte material according to the third embodiment can be further improved. The upper limit of the total content of $P_2S_5$ and $P_4S_9$ in the phosphorus sulfide composition according to the third embodiment is not particularly limited, but may be, for example, 100% by mass or less.

The solid $^{31}$P-NMR spectrum can be measured, for example, by the following method.

First, in a glove box purged with $N_2$ gas, a measurement sample tube having a diameter of 3.2 mm is filled with a test sample and is spun (Magic Angle Spinning: MAS) in a state where it is inclined at a magic angle (54.7 degrees) with respect to an external magnetic field to perform the measurement under the following conditions.

Device: JNM-ECA-600 manufactured by JEOL RESONANCE Inc.
Observation frequency: 242.95 MHz
Pulse width: 90° pulse
Pulse waiting time: 2800 seconds
Number of integrations: 64 times
Measurement mode: a single pulse method
MAS rate: 12 kHz
Reference material: $(NH_4)_2HPO_4$ ·1.33 ppm

Regarding peaks detected in the $^{31}$P-NMR spectrum of the test sample, waveform separation using a Gaussian function based on the following peak assignment is performed to calculate an integrated value of each of the peaks with reference to Reference Document 1 "Hellmut Eckert, Cheryl S. Liang and Galen D. Stucky: 31P magic angle spinning NMR of crystalline phosphorous sulfides. Correlation of 31P chemical shielding tensors with local environments, J. Phys. Chem, 1989, 93, 452-457". The integrated value of the peak derived from each of the component is proportional to the molar number of phosphorus included. Therefore, a content ratio can be calculated based on the obtained integrated value and the molecular weight of each of the components.

The chemical shift of $P_2S_5$ is 40 to 52 ppm, the chemical shift of $P_4S_9$ is 52 to 70 ppm, the chemical shift of $P_4S_7$ is 80 to 90 ppm, 90 to 100 ppm, or 110 to 115 ppm, and the chemical shift of $P_4S_3$ is 80 to 90 ppm or 90 to 100 ppm.

The degree of crystallization of the phosphorus sulfide composition according to the third embodiment, which is calculated from a spectrum obtained by X-ray diffraction using $CuK\alpha$ rays as a radiation source, is 40% or more and 70% or less, and from the viewpoint that the lithium ion conductivity of the sulfide-based inorganic solid electrolyte material according to the third embodiment can be further improved, the degree of crystallization is preferably 45% or more, more preferably 48% or more, still more preferably 50% or more, and even still more preferably 52% or more, and is preferably 65% or less, more preferably 63% or less, and still more preferably 60% or less.

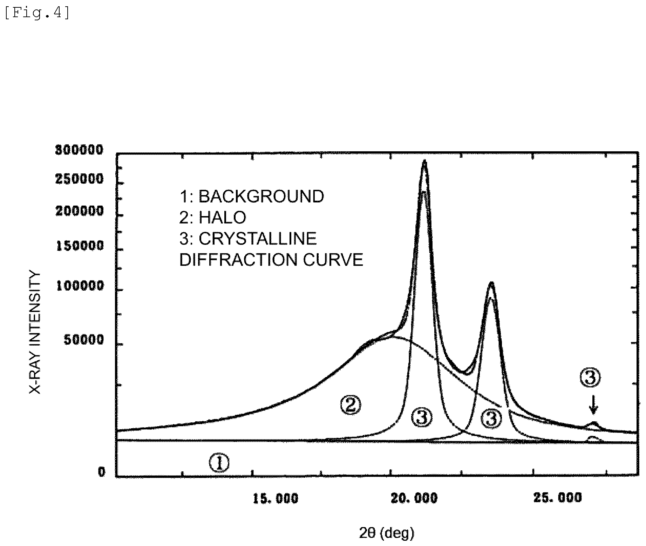

Here, a method for calculating the degree of crystallization of the phosphorus sulfide composition will be described with reference to FIG. 4. FIG. 4 is a diagram showing an X-ray diffraction analysis spectrum for describing the method for calculating the degree of crystallization of the phosphorus sulfide composition according to the third embodiment (peak separation method).

First, since a diffraction curve corresponding to a crystalline substance is a sharp peak, and a diffraction curve corresponding to an amorphous substance is a broad halo in scattering in the X-ray diffraction using $CuK\alpha$ rays as a radiation source, the ratio of the crystalline substance to the total of the crystalline substance and the amorphous substance can be calculated as the degree of crystallization.

In the third embodiment, a peak separation method is used as the method for calculating the degree of crystallization. In the X-ray diffraction pattern (also referred to as a scattering curve), the peaks are separated into a crystalline diffraction curve and an amorphous halo using a profile fitting method without considering the influence of non-interference scattering, lattice disorder, and the like. Analysis software attached to the X-ray diffractometer can be used for the profile fitting.

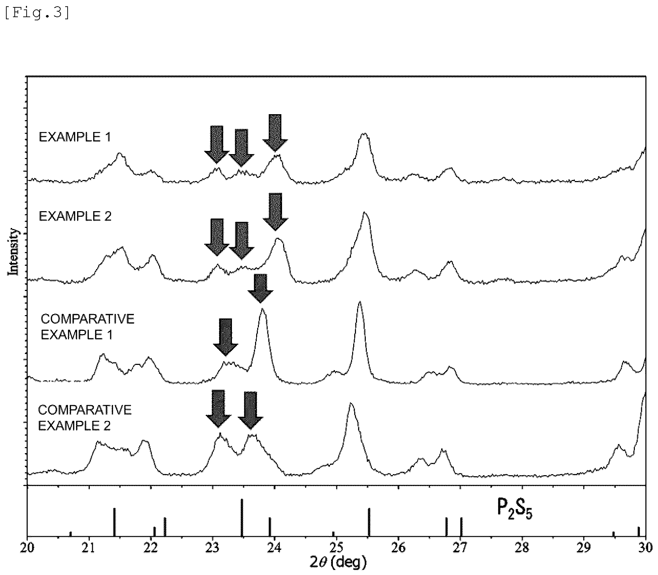

A specific procedure for calculating the degree of crystallization is as follows (refer to FIG. 4; X-ray diffraction handbook, Rigaku Corporation, February 21, 2000, third edition, p. 83, FIG. 3.6.2).

(1) Separation of Background

The X-ray intensities from the low angle side to the high angle side are connected by a straight line, and the area under the straight line is used as a background.

(2) Separation of Halo

A halo pattern due to the amorphous substance is estimated, and the halo is separated from the scattering curve from which the background is subtracted.

(3) Separation of Crystalline Diffraction Curve

A crystalline diffraction curve is separated by the same method as in (2) described above.

(4) Calculation of Degree of Crystallization

The degree of crystallization is calculated from the following Equation (1) using the area (integrated intensity) under the curve of the diffraction curve of the amorphous component (the amorphous halo) and the diffraction curve of the crystalline component (the crystalline diffraction curve) separated from the scattering curve.

$$Xc = \{Ic/(Ic + Ia)\} \times 100 \ ... \ (1)$$

Ic: area (integrated intensity) under curve of diffraction curve (crystalline diffraction curve) of crystalline component
Ia: area (integrated intensity) under curve of diffraction curve (amorphous halo) of amorphous component

In addition, in a case where the phosphorus sulfide composition includes a solvent, it is preferable to dry and remove the solvent from the phosphorus sulfide composition and then carry out the measurement.

From the viewpoint that the lithium ion conductivity of the sulfide-based inorganic solid electrolyte material according to the third embodiment can be further improved, in the DSC curve of the phosphorus sulfide composition of the third embodiment, which is obtained by measurement with a differential scanning calorimeter, it is preferable that an endothermic peak is observed in a temperature range of 280°C or higher and 300°C or lower, and the amount of heat of fusion of the endothermic peak is preferably 60 J/g or higher, more preferably 65 J/g or higher, still more preferably 70 J/g or higher, even more preferably 75 J/g or higher, even still more preferably 80 J/g or higher, and preferably 90 J/g or lower, more preferably 88 J/g or lower, and still more preferably 85 J/g or lower.

The DSC curve can be measured by, for example, the following method.

First, 20 to 25 mg of the phosphorus sulfide composition is weighed in an aluminum pan in an argon atmosphere, and then the aluminum lid is covered and sealed with a sample sealer. The aluminum container of the reference is in an empty state. Differential scanning calorimetry is performed using a differential scanning calorimeter under conditions of a start temperature of 25°C, a measurement temperature range of 30°C to 350°C, a temperature rising rate of 5°C/min, and an atmosphere of 100 ml/min of argon. In addition, the differential scanning calorimeter is not particularly limited, and for example, DSC6300 manufactured by Seiko Instruments Inc. can be used.

In addition, in a case where the phosphorus sulfide composition includes a solvent, it is preferable to dry and remove the solvent from the phosphorus sulfide composition and then carry out the measurement.

From the DSC curve obtained in this manner, the presence or absence of an endothermic peak in a temperature range of 280°C or higher and 300°C or lower can be observed.

Here, the amount of heat of fusion of the endothermic peak is calculated by obtaining an area surrounded by a melting endothermic curve including the endothermic peak and the baseline. Since the intrinsic heat capacity of the substance is different before and after the thermal change, the baseline before and after the endothermic peak is not a straight line.

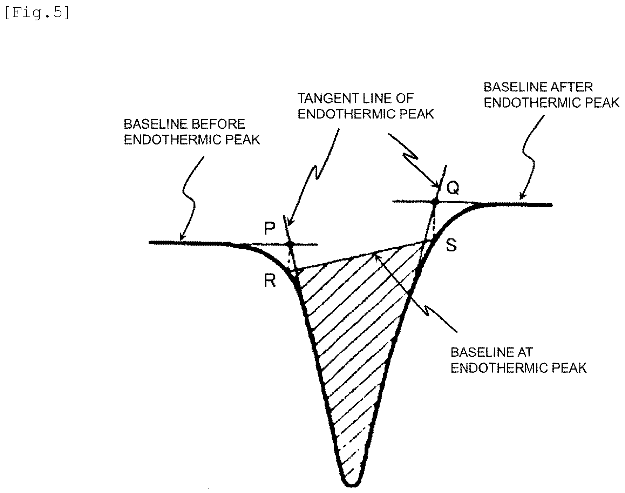

Therefore, in the present embodiment, the baseline at the endothermic peak is a line connecting a point R and a point S shown in FIG. 5. The point R is an intersection between a line that passes through an intersection P between the baseline before the endothermic peak and the tangent line of the endothermic peak and is parallel to the Y-axis, and the melting endothermic curve. The point S is an intersection between a line that passes through an intersection Q between the baseline after the endothermic peak and the tangent line of the endothermic peak and is parallel to the Y-axis, and the melting endothermic curve.

Examples of the properties of the phosphorus sulfide composition of the third embodiment include powdery. Since the sulfide-based inorganic solid electrolyte material of the third embodiment is generally produced by a dry method, in a case where the properties of the phosphorus sulfide composition of the third embodiment are powdery, the production of the sulfide-based inorganic solid electrolyte material is further facilitated.

[Method for Producing Sulfide-Based Inorganic Solid Electrolyte Material]

The method for producing a sulfide-based inorganic solid electrolyte material according to the third embodiment includes a step of obtaining a sulfide-based inorganic solid electrolyte material in a vitreous state by mechanically processing a raw material composition of a sulfide-based inorganic solid electrolyte material including the phosphorus sulfide composition according to the third embodiment and lithium sulfide such that each component is vitrified in a chemical reaction.

That is, the method for producing a sulfide-based inorganic solid electrolyte material according to the third embodiment includes the following step (A), and may further include a step (B) or a step (C). The step (C) may be carried out between the step (A) and the step (B) or after the step (B).

Step (A): a step of obtaining a sulfide-based inorganic solid electrolyte material in a vitreous state by mechanically processing a raw material composition of the sulfide-based inorganic solid electrolyte material including the phosphorus sulfide composition according to the third embodiment and lithium sulfide such that each component is vitrified in a chemical reaction

Step (B): a step of obtaining a sulfide-based inorganic solid electrolyte material in a glass ceramic state by heating the obtained sulfide-based inorganic solid electrolyte material in the vitreous state such that at least a part of the sulfide-based inorganic solid electrolyte material is crystallized

Step (C): a step of crushing, classifying, or granulating the obtained sulfide-based inorganic solid electrolyte material in the vitreous or glass ceramic state

(Step (A))

First, a raw material composition of a sulfide-based inorganic solid electrolyte material is prepared. The raw material composition of the sulfide-based inorganic solid electrolyte material includes the phosphorus sulfide composition of the third embodiment and lithium sulfide, and may further include lithium nitride as necessary.

Here, a mixing ratio between the respective raw materials in the raw material composition is adjusted such that the obtained sulfide-based inorganic solid electrolyte material has a desired composition ratio.

Other, the preferable aspect of the step (A) in the method for producing a sulfide-based inorganic solid electrolyte material according to the third embodiment is the same as the preferable aspect of the step (A) in the method for producing a sulfide-based inorganic solid electrolyte material according to the first embodiment. In addition, the preferable aspects of lithium sulfide and lithium nitride used as raw materials are also the same as the preferable aspects of lithium sulfide and lithium nitride in the method for producing a sulfide-based inorganic solid electrolyte material according to the first embodiment.

The preferable aspects of the step (B) and the step (C) in the method for producing a sulfide-based inorganic solid electrolyte material according to the third embodiment are the same as the preferable aspects of the step (B) and the step (C) in the method for producing a sulfide-based inorganic solid electrolyte material according to the first embodiment.

[Sulfide-Based Inorganic Solid Electrolyte Material]

The sulfide-based inorganic solid electrolyte material according to the third embodiment can be obtained by the method for producing a sulfide-based inorganic solid electrolyte material according to the third embodiment. That is, the sulfide-based inorganic solid electrolyte material of the third embodiment includes a mechanically processed product of the raw material composition of the sulfide-based inorganic solid electrolyte material of the third embodiment.

The preferable aspect of the sulfide-based inorganic solid electrolyte material according to the third embodiment is the same as the preferable aspect of the sulfide-based inorganic solid electrolyte material according to the first embodiment.

[Sulfide-Based Inorganic Solid Electrolyte]

The sulfide-based inorganic solid electrolyte according to the present embodiment includes the sulfide-based inorganic solid electrolyte material according to the present embodiment.

The sulfide-based inorganic solid electrolyte according to the present embodiment may include a solid electrolyte material different from the sulfide-based inorganic solid electrolyte material according to the present embodiment as a component other than the sulfide-based inorganic solid electrolyte material according to the present embodiment, for example, within a range where the object of the present invention does not deteriorate.

The solid electrolyte material different from the sulfide-based inorganic solid electrolyte material according to the present embodiment is not particularly limited as long as the material has ionic conductivity and insulating properties. A solid electrolyte material that is used for a lithium ion battery in general can be used. Examples of the solid electrolyte materials include: an inorganic solid electrolyte material such as a sulfide-based inorganic solid electrolyte material different from the sulfide-based inorganic solid electrolyte material according to the present embodiment, an oxide-based inorganic solid electrolyte material, or other lithium-based inorganic solid electrolyte materials; and an organic solid electrolyte material such as a polymer electrolyte.

Examples of the sulfide-based inorganic solid electrolyte materials different from the sulfide-based inorganic solid electrolyte material according to the present embodiment include a $Li_2S$-$SiS_2$ material, a $Li_2S$-$GeS_2$ material, a $Li_2S$-$Al_2S_3$ material, and a $Li_2S$-$SiS_2$-$Li_3PO_4$ material. These may be used alone, or may be used in combination of two or more thereof.

Here, for example, the $Li_2S$-$SiS_2$ material means a solid electrolyte material obtained by a chemical reaction caused by mechanically processing an inorganic composition including at least $Li_2S$ (lithium sulfide) and $SiS_2$.

Here, the lithium sulfide also includes lithium polysulfide.

Examples of the oxide-based inorganic solid electrolyte material include a NASICON type material such as $LiTi_2(PO_4)_3$, $LiZr_2(PO_4)_3$, or $LiGe_2(PO_4)_3$; a perovskite type material such as $(La_{0.5+x}Li_{0.5-3x})TiO_3$; a $Li_2O$-$P_2O_5$ material; and a $Li_2O$-$P_2O_5$-$Li_3N$ material.

Examples of the other lithium-based inorganic solid electrolyte materials include LiPON, $LiNbO_3$, $LiTaO_3$, $Li_3PO_4$, $LiPO_{4-x}N_x$ (x satisfies $0 < x \leq 1$), LiN, LiI, and LISICON.

Further, glass ceramics obtained by precipitating crystal of the inorganic solid electrolytes can also be used as the inorganic solid electrolyte material.

As the above-described organic solid electrolyte material, for example, a polymer electrolyte such as a dry polymer electrolyte or a gel electrolyte can be used.

As the polymer electrolyte, in general, those that are used for a lithium ion battery can be used.

[Sulfide-Based Inorganic Solid Electrolyte Membrane]

The sulfide-based inorganic solid electrolyte membrane according to the present embodiment includes the sulfide-based inorganic solid electrolyte according to the present embodiment as a main component.

The sulfide-based inorganic solid electrolyte membrane according to the present embodiment is used, for example, in a solid electrolyte layer constituting an all-solid state lithium ion battery. Examples of the all-solid-state lithium ion battery to which the solid electrolyte membrane according to the present embodiment is applied include an all-solid-state lithium ion battery in which a positive electrode, a solid electrolyte layer, and a negative electrode are stacked in this order. In this case, the solid electrolyte layer is formed of the solid electrolyte membrane.

From the viewpoint of further suppressing the omission of the solid electrolyte and the occurrence of cracks on the surface of the solid electrolyte membrane, the average thickness of the sulfide-based inorganic solid electrolyte membrane according to the present embodiment is preferably 5 μm or more, more preferably 10 μm or more, and still more preferably 20 μm or more.

The average thickness of the sulfide-based inorganic solid electrolyte membrane of the present embodiment is preferably 500 μm or less, more preferably 200 μm or less, and still more preferably 100 μm or less. As a result, the impedance of the solid electrolyte membrane can be further reduced, and as a result, the battery characteristics of the all-solid state lithium ion battery to be obtained can be further improved.

It is preferable that the sulfide-based inorganic solid electrolyte membrane according to the present embodiment is a compact obtained by compression-molding a particle-shaped solid electrolyte. That is, it is preferable that the particle-shaped solid electrolyte is pressurized to obtain a solid electrolyte membrane having a certain strength due to the anchor effect between the solid electrolyte materials. By obtaining the compact, the solid electrolytes bind to each other, and the strength of the obtained solid electrolyte membrane can be further improved. As a result, the omission of the solid electrolyte or the occurrence of cracks on the surface of the solid electrolyte membrane can be further suppressed.

The content of the sulfide-based inorganic solid electrolyte material of the present embodiment in the sulfide-based inorganic solid electrolyte membrane of the present embodiment is preferably 50% by mass or more, more preferably 60% by mass or more, still more preferably 70% by mass or more, even more preferably 80% by mass or more, and even still more preferably 90% by mass or more. As a result, the contact between the solid electrolytes are improved, the interface contact resistance of the solid electrolyte membrane can be decreased, and as a result, the lithium ion conductivity of the solid electrolyte membrane is further improved. By using the solid electrolyte membrane having excellent lithium ion conductivity, the battery characteristics of the obtained all-solid-state lithium ion battery can be further improved.

The upper limit of the content of the sulfide-based inorganic solid electrolyte material of the present embodiment in the sulfide-based inorganic solid electrolyte membrane of the present embodiment is not particularly limited, but, for example, may be 100% by mass or less.

The planar shape of the sulfide-based inorganic solid electrolyte membrane according to the present embodiment is not particularly limited and can be appropriately selected according to the shape of the electrode or the current collector, but can be set to, for example, a rectangle.

The sulfide-based inorganic solid electrolyte membrane according to the present embodiment may include a binder resin, and the content of the binder resin is preferably less than 0.5% by mass, more preferably less than 0.1% by mass, still more preferably less than 0.05% by mass, and even still more preferably less than 0.01% by mass. In addition, it is still more preferable that the solid electrolyte membrane according to the present embodiment does not substantially include the binder resin, and it is still more preferable that the solid electrolyte membrane according to the present embodiment does not include the binder resin. As a result, the contact between the solid electrolytes can be improved, and the interfacial contact resistance of the solid electrolyte membrane can be decreased. As a result, the lithium ion conductivity of the solid electrolyte membrane can be further improved. By using the solid electrolyte membrane having improved lithium ion conductivity, the battery characteristics of the obtained all-solid-state lithium ion battery can be improved.

The expression "does not substantially include the binder resin" means that the binder resin may be included to the extent that the effect of the present embodiment does not deteriorate. In addition, when an adhesive resin layer is provided between the solid electrolyte layer and the positive electrode or the negative electrode, an adhesive resin derived from the adhesive resin layer present in the vicinity of an interface between the solid electrolyte layer and the adhesive resin layer is excluded from "the binder resin in the solid electrolyte membrane".

The binder resin refers to a binder that is generally used for a lithium ion battery in order to bind the inorganic solid electrolyte materials to each other. Examples of the binder resin include polyvinyl alcohol, polyacrylic acid, carboxymethyl cellulose, polytetrafluoroethylene, polyvinylidene fluoride, styrene-butadiene rubber, and polyimide.

The sulfide-based inorganic solid electrolyte membrane according to the present embodiment can be obtained, for example, by depositing the particle-shaped solid electrolyte on a cavity surface of a mold or a base material surface in a film shape and subsequently pressurizing the solid electrolyte deposited in a film shape.

A method of pressurizing the solid electrolyte is not particularly limited. For example, when the particle-shaped solid electrolyte is deposited on a cavity surface of a mold, pressing by a mold and a stamp can be used. When the particle-shaped solid electrolyte is deposited on a substrate surface, pressing, roll pressing, or flat pressing by a mold and a stamp can be used.

The pressure at which the solid electrolyte is pressurized is, for example, 10 MPa or higher or 500 MPa or lower.

In addition, optionally, the inorganic solid electrolyte deposited in a film shape may be pressurized and heated. In a case where heating and pressurization are carried out, fusion and bonding between the solid electrolytes occur, the strength of the obtained solid electrolyte membrane is further increased, and as a result, the omission of the solid electrolyte and the occurrence of cracks on the surface of the solid electrolyte membrane can be further suppressed.

The temperature at which the solid electrolyte is heated is, for example, 40°C or higher and 500°C or lower.

[Lithium Ion Battery]

The lithium ion battery of the present embodiment is, for example, a lithium ion battery including a positive electrode including a positive electrode active material layer, an electrolyte layer, and a negative electrode including a negative electrode active material layer, at least one of the positive electrode active material layer, the electrolyte layer, or the negative electrode active material layer includes the sulfide-based inorganic solid electrolyte material of the present embodiment.

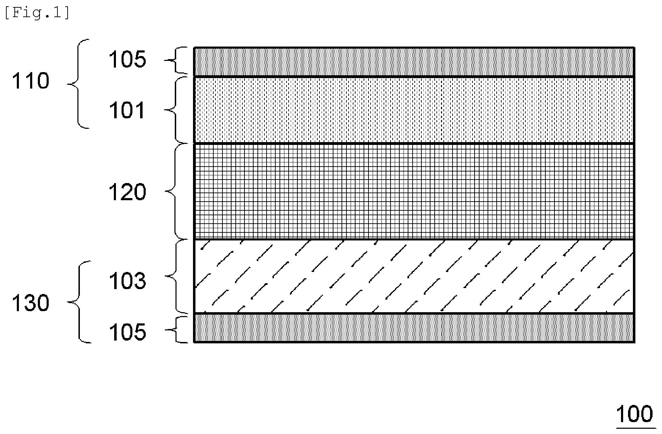

FIG. 1 is a cross-sectional view showing an example of a structure of a lithium ion battery of the present embodiment.

A lithium ion battery 100 according to the present embodiment , for example, includes a positive electrode 110 that includes a positive electrode active material layer 101, an electrolyte layer 120, and a negative electrode 130 that includes a negative electrode active material layer 103.

Further, at least one of the positive electrode active material layer 101, the negative electrode active material layer 103, or the electrolyte layer 120 contains the above-described sulfide-based inorganic solid electrolyte material according to the present embodiment. In addition, it is preferable that all of the positive electrode active material layer 101, the negative electrode active material layer 103, and the electrolyte layer 120 contain the sulfide-based inorganic solid electrolyte material according to the present embodiment.

In the present embodiment, unless specified otherwise, a layer including a positive electrode active material will be referred to as "the positive electrode active material layer 101". As necessary, the positive electrode 110 may or may not further include a current collector 105 in addition to the positive electrode active material layer 101. In addition, in the present embodiment, unless specified otherwise, a layer including a negative electrode active material will be referred to as "the negative electrode active material layer 103". As necessary, the negative electrode 130 may or may not further include the current collector 105 in addition to the negative electrode active material layer 103.

The shape of the lithium ion battery 100 according to the present embodiment is not particularly limited and may be a cylindrical shape, a coin shape, a square shape, a film shape, or any other shape.

The lithium ion battery 100 according to the present embodiment is produced according to a generally known method. For example, the lithium ion battery 100 is prepared by forming a laminate including the positive electrode 110, the electrolyte layer 120, and the negative electrode 130 in a cylindrical shape, a coin shape, a square shape, a film shape, or any other shape and filling the laminate with a non-aqueous electrolytic solution as necessary.

<Positive Electrode>

The positive electrode 110 is not particularly limited, and a positive electrode that is generally used for a lithium ion battery can be used. The positive electrode 110 is not particularly limited and can be produced using a generally well-known method. For example, the positive electrode 110 can be obtained by forming the positive electrode active material layer 101 including the positive electrode active material on a surface of the current collector 105 such as aluminum foil.

The thickness or density of the positive electrode active material layer 101 is appropriately determined depending on the intended use of the battery and, thus can be set based on generally well-known information without any particular limitation.

The positive electrode active material layer 101 includes the positive electrode active material.

The positive electrode active material is not particularly limited as long as it is a positive electrode active material that can be used for a positive electrode of a lithium ion battery. For example, a composite oxide such as lithium cobalt oxide ($LiCoO_2$), lithium nickel oxide ($LiNiO_2$), lithium manganese oxide ($LiMn_2O_4$), a solid solution oxide ($Li_2MnO_3$-$LiMO_2$ (M = Co, Ni, or the like)), lithium-manganese-nickel oxide ($LiNi_{1/3}Mn_{1/3}Co_{1/3}O_2$), and an olivine-type lithium phosphate ($LiFePO_4$); a conductive polymer such as polyaniline or polypyrrole; a sulfide-based positive electrode active material such as $Li_2S$, $CuS$, a Li-Cu-S compound, $TiS_2$, $FeS$, $MoS_2$, a Li-Mo-S compound, a Li-Ti-S compound, a Li-V-S compound, or a Li-Fe-S compound; and a material including sulfur as an active material such as acetylene black impregnated with sulfur, porous carbon impregnated with sulfur, or mixed powder including sulfur and carbon can be used.

The positive electrode active material layer 101 is not particularly limited and may include, as components other than the positive electrode active material, for example, one or more materials selected from a binder resin, a thickener, a conductive auxiliary agent, a solid electrolyte material, and the like. Hereinafter, the respective materials will be described.

The positive electrode active material layer 101 may include a binder resin having a function of binding the positive electrode active material particles to each other and binding the positive electrode active material and the current collector 105 to each other.

The binder resin according to the present embodiment is not particularly limited as long as it is a typical binder resin that can be used for a lithium ion battery. Examples of the binder resin include polyvinyl alcohol, polyacrylic acid, carboxymethyl cellulose, polytetrafluoroethylene, polyvinylidene fluoride, styrene-butadiene rubber, and polyimide. These binders may be used alone or in combination of two or more thereof.

From the viewpoint of securing the fluidity of a slurry suitable for application, the positive electrode active material layer 101 may include a thickener. The thickener is not particularly limited as long as it is a typical thickener that can be used for a lithium ion battery. Examples of the thickener include a cellulose-based polymer such as carboxymethyl cellulose, methyl cellulose, or hydroxypropyl cellulose and an ammonium salt and an alkali metal salt thereof; and a water-soluble polymer such as polycarboxylic acid, polyethylene oxide, polyvinyl pyrrolidone, polyacrylate, or polyvinyl alcohol. These thickeners may be used alone or in combination of two or more thereof.

From the viewpoint of improving the conductivity of the positive electrode 110, the positive electrode active material layer 101 may include a conductive auxiliary agent. The conductive auxiliary agent is not particularly limited as long as it is a typical conductive auxiliary agent that can be used for a lithium ion battery. Examples of the conductive auxiliary agent include a carbon black such as acetylene black or Ketjen black, and a carbon material such as a vapor-grown carbon fiber.

The positive electrode of the lithium ion battery according to the present embodiment may include a solid electrolyte containing the sulfide-based inorganic solid electrolyte material according to the present embodiment, or may include a solid electrolyte containing a solid electrolyte material different from the sulfide-based inorganic solid electrolyte material according to the present embodiment.

The solid electrolyte material different from the sulfide-based inorganic solid electrolyte material according to the present embodiment is not particularly limited as long as the material has ionic conductivity and insulating properties. In general, a solid electrolyte material that is used for a lithium ion battery can be used. Examples of the solid electrolyte materials include an inorganic solid electrolyte material such as a sulfide-based inorganic solid electrolyte material different from the sulfide-based inorganic solid electrolyte material according to the present embodiment, an oxide-based inorganic solid electrolyte material, or other lithium-based inorganic solid electrolyte materials; and an organic solid electrolyte material such as a polymer electrolyte. More specifically, the solid electrolyte materials described in the description of the sulfide-based inorganic solid electrolyte of the present embodiment can be used.

The mixing ratio between various materials in the positive electrode active material layer 101 is appropriately determined depending on the intended use of the battery and, thus can be set based on generally well-known information without any particular limitation.

<Negative Electrode>

The negative electrode 130 is not particularly limited, and a negative electrode that is generally used for a lithium ion battery can be used. The negative electrode 130 is not particularly limited and can be produced using a generally well-known method. For example, the negative electrode 130 can be obtained by forming the negative electrode active material layer 103 including the negative electrode active material on a surface of the current collector 105 such as copper.

The thickness or density of the negative electrode active material layer 103 is appropriately determined depending on the intended use of the battery and, thus can be set based on generally well-known information without any particular limitation.

The negative electrode active material layer 103 includes the negative electrode active material.

The negative electrode active material is not particularly limited as long as the material is a negative electrode active material that can be used for a negative electrode of a lithium ion battery. Examples of the negative electrode active material include a carbon material such as natural graphite, artificial graphite, resinous coal, carbon fiber, activated charcoal, hard carbon, or soft carbon; a metal-based material mainly formed of lithium, a lithium alloy, tin, a tin alloy, silicon, a silicon alloy, gallium, a gallium alloy, indium, an indium alloy, aluminum, or an aluminum alloy; a conductive polymer such as polyacene, polyacetylene, or polypyrrole; and a lithium titanium composite oxide (for example, $Li_4Ti_5O_{12}$). These negative electrode active materials may be used alone or in combination of two or more thereof.

The negative electrode active material layer 103 is not particularly limited and may include, as components other than the negative electrode active material, for example, one or more materials selected from a binder resin, a thickener, a conductive auxiliary agent, a solid electrolyte material, and the like. These materials are not particularly limited, and examples thereof are the same as those of the materials used for the positive electrode 110.

The mixing ratio between various materials in the negative electrode active material layer 103 is appropriately determined depending on the intended use of the battery and, thus can be set based on generally well-known information without any particular limitation.

The negative electrode of the lithium ion battery according to the present embodiment may include a solid electrolyte containing the sulfide-based inorganic solid electrolyte material according to the present embodiment, or may include a solid electrolyte containing a solid electrolyte material different from the sulfide-based inorganic solid electrolyte material according to the present embodiment.

The solid electrolyte material different from the sulfide-based inorganic solid electrolyte material according to the present embodiment is not particularly limited as long as the material has ionic conductivity and insulating properties. In general, a solid electrolyte material that is used for a lithium ion battery can be used. Examples of the solid electrolyte materials include an inorganic solid electrolyte material such as a sulfide-based inorganic solid electrolyte material different from the sulfide-based inorganic solid electrolyte material according to the present embodiment, an oxide-based inorganic solid electrolyte material, or other lithium-based inorganic solid electrolyte materials; and an organic solid electrolyte material such as a polymer electrolyte. More specifically, the solid electrolyte materials described in the description of the sulfide-based inorganic solid electrolyte of the present embodiment can be used.

<Electrolyte Layer>

Next, the electrolyte layer 120 will be described. The electrolyte layer 120 is a layer formed between the positive electrode active material layer 101 and the negative electrode active material layer 103.

Examples of the electrolyte layer 120 include a separator impregnated with a non-aqueous electrolytic solution and a solid electrolyte layer including a solid electrolyte.

The separator according to the present embodiment is not particularly limited as long as it has a function of electrically insulating the positive electrode 110 and the negative electrode 130 and allowing transmission of lithium ions.

For example, a porous film can be used.

As the porous membrane, a microporous polymer film is suitably used, and examples of a material thereof include polyolefin, polyimide, polyvinylidene fluoride, and polyester. In particular, a porous polyolefin film is preferable, and specific examples thereof include a porous polyethylene film and a porous polypropylene film.

The non-aqueous electrolytic solution is obtained by dissolving an electrolyte in a solvent.

As the electrolyte, any well-known lithium salt can be used, and the electrolyte may be selected depending on the kind of the active material. Examples of the electrolyte include $LiClO_4$, $LiBF_6$, $LiPF_6$, $LiCF_3SO_3$, $LiCF_3CO_2$, $LiAsF_6$, $LiSbF_6$, $LiB_{10}Cl_{10}$, $LiAlCl_4$, $LiCl$, $LiBr$, $LiB(C_2H_5)_4$, $CF_3SO_3Li$, $CH_3SO_3Li$, $LiCF_3SO_3$, $LiC_4F_9SO_3$, $Li(CF_3SO_2)_2N$, and a lithium lower aliphatic carboxylate.

The solvent in which the electrolyte is dissolved is not particularly limited as long as it is typically used as a liquid in which the electrolyte is dissolved. Examples of the solvent include: a carbonate such as ethylene carbonate (EC), propylene carbonate (PC), butylene carbonate (BC), dimethyl carbonate (DMC), diethyl carbonate (DEC), methyl ethyl carbonate (MEC), or vinylene carbonate (VC); a lactone such as $\gamma$-butyrolactone or $\gamma$-valerolactone; an ether such as trimethoxy methane, 1,2-dimethoxyethane, diethyl ether, 2-ethoxy ethane, tetrahydrofuran, or 2-methyl tetrahydrofuran; a sulfoxide such as dimethyl sulfoxide; an oxolane such as 1,3-dioxolane or 4-methyl-1,3-dioxolane; a nitrogen-containing solvent such as acetonitrile, nitromethane, formamide, or dimethylformamide; an organic acid ester such as methyl formate, methyl acetate, ethyl acetate, butyl acetate, methyl propionate, or ethyl propionate; a phosphate triester or a diglyme; a triglyme; a sulfolane such as sulfolane or methyl sulfolane; an oxazolidinone such as 3-methyl-2-oxazolidinone; and a sultone such as 1,3-propanesultone, 1,4-butanesultone, or naphthasultone. These may be used alone, or may be used in combination of two or more thereof.

The solid electrolyte layer according to the present embodiment is a layer formed between the positive electrode active material layer 101 and the negative electrode active material layer 103, and is formed of a solid electrolyte including a solid electrolyte material. The solid electrolyte in the solid electrolyte layer is not particularly limited as long as it has lithium ion conductivity. In the present embodiment, it is preferable that the solid electrolyte includes the sulfide-based inorganic solid electrolyte material according to the present embodiment.

The content of the solid electrolyte included in the solid electrolyte layer of the lithium ion battery according to the present embodiment is not particularly limited as long as the ratio is set such that desired insulating properties can be obtained, but is preferably 10% by volume or more and 100% by volume or less, more preferably 50% by volume or more and 100% by volume or less, still more preferably 70% by volume or more and 100% by volume or less, and even more preferably 90% by volume or more and 100% by volume or less, and even still more preferably does not substantially include a component other than the solid electrolyte.

The expression "does not substantially include a component other than the solid electrolyte" means that a component other than the solid electrolyte may be contained to the extent that the effects of the present embodiment are not impaired.

The solid electrolyte included in the solid electrolyte layer of the lithium ion battery according to the present embodiment is not particularly limited as long as the solid electrolyte has lithium ion conductivity, but the sulfide-based inorganic solid electrolyte according to the present embodiment described above is preferable.

The content of the sulfide-based inorganic solid electrolyte according to the present embodiment, which is included in the solid electrolyte layer of the lithium ion battery according to the present embodiment, is not particularly limited as long as the ratio is set such that desired insulating properties can be obtained, but is preferably 10% by volume or more and 100% by volume or less, more preferably 50% by volume or more and 100% by volume or less, still more preferably 70% by volume or more and 100% by volume or less, and even still more preferably 90% by volume or more and 100% by volume or less, and the lithium ion battery according to the present embodiment does not substantially include components other than the sulfide-based inorganic solid electrolyte according to the present embodiment.

The expression "does not substantially include a component other than the sulfide-based inorganic solid electrolyte according to the present embodiment" means that a component other than the sulfide-based inorganic solid electrolyte according to the present embodiment may be contained to the extent that the effects of the present embodiment are not impaired.

The solid electrolyte layer of the lithium ion battery according to the present embodiment may contain a binder resin. By containing the binder resin, a flexible solid electrolyte layer can be obtained. Examples of the binder resin include a fluorine-containing binder such as polytetrafluoroethylene or polyvinylidene fluoride.

The thickness of the solid electrolyte layer of the lithium ion battery according to the present embodiment is preferably 0.1 $\mu$m or more and 1000 $\mu$m or less, and more preferably 0.1 $\mu$m or more and 300 $\mu$m or less.

Although the embodiments of the present invention have been described above, these are examples of the present invention, and various configurations other than the above can be adopted.

In addition, the present invention is not limited to the above-described embodiments, and modifications, improvements, and the like within a range where the object of the present invention can be achieved are included in the present invention.

Examples

Hereinafter, the present invention will be described with reference to Examples and Comparative Examples, but the present invention is not limited thereto.

[1] Measurement Method

First, a measurement method in the following Examples and Comparative Examples will be described.

(1) Solid $^{31}$P-NMR Measurement

The solid $^{31}$P-NMR measurement was performed on the phosphorus sulfide compositions used in Examples and Comparative Examples as follows.

First, in a glove box purged with $N_2$ gas, a measurement sample tube having a diameter of 3.2 mm was filled with a test sample and was spun (Magic Angle Spinning: MAS) in a state where it is inclined at a magic angle (54.7 degrees) with respect to an external magnetic field to perform the measurement under the following conditions.

Device: JNM-ECA-600 manufactured by JEOL RESONANCE Inc.
Observation frequency: 242.95 MHz
Pulse width: 90° pulse
Pulse waiting time: 2800 seconds
Number of integrations: 64 times
Measurement mode: a single pulse method
MAS rate: 12 kHz
Reference material: $(NH_4)_2HPO_4\cdot1.33$ ppm

Regarding peaks detected in the $^{31}$P-NMR spectrum of the test sample, waveform separation using a Gaussian function based on the following peak assignment was performed to calculate an integrated value of each of the peaks with reference to Reference Document 1 "Hellmut Eckert, Cheryl S. Liang and Galen D. Stucky: 31P magic angle spinning NMR of crystalline phosphorous sulfides. Correlation of 31P chemical shielding tensors with local environments, J. Phys. Chem, 1989, 93, 452-457". Therefore, a content ratio was calculated based on the obtained integrated value and the molecular weight of each of the components.

The chemical shift of $P_2S_5$ is 40 to 52 ppm, the chemical shift of $P_4S_9$ is 52 to 70 ppm, the chemical shift of $P_4S_7$ is 80 to 90 ppm, 90 to 100 ppm, or 110 to 115 ppm, and the chemical shift of $P_4S_3$ is 80 to 90 ppm or 90 to 100 ppm.

(2) Measurement of Composition Ratio in Sulfide-Based Inorganic Solid Electrolyte Material

The % by mass of each of Li, P, and S in the sulfide-based inorganic solid electrolyte material obtained in each of Examples and Comparative Examples was measured and obtained by ICP Emission Spectroscopy using an ICP emission spectrometer (SPS3000, manufactured by Seiko Instruments Inc.). Based on the obtained values, a molar ratio between the respective elements was calculated.

(3) Measurement of Lithium Ion Conductivity

The lithium ion conductivity of each of the sulfide-based inorganic solid electrolyte materials obtained in Examples and Comparative Examples was measured by the following method. The results are shown in Table 1.

First, 110 mg of the sulfide-based inorganic solid electrolyte material was pressed under the conditions of 270 MPa and 10 minutes to obtain a disk-shaped sample having a diameter of 9.5 mm and a thickness of 1 mm.

Next, using a potentiostat/galvanostat SP-300 (manufactured by Bio-Logic Sciences Instruments), the lithium ion conductivity of the obtained disk-shaped sample was measured by an alternating current impedance method under conditions of an applied voltage of 10 mV, a measurement frequency range of 0.1 Hz to 3 MHz, and a measurement temperature of 27°C, using a Li foil as an electrode.

(4) X-Ray Diffraction Analysis

X-ray diffraction analysis spectra of the phosphorus sulfide compositions used in Examples and Comparative Examples were measured by the following method.

Using an X-ray diffractometer (RINT2000, manufactured by Rigaku Corporation), the X-ray diffraction analysis spectrum of each of the phosphorus sulfide compositions was obtained by using CuKα rays as a radiation source under the conditions of a voltage of 40 kV, a current of 40 mA, a divergence slit of 1°, a divergence slit vertical limit of 10 mm, a scattering slit of 1°, a receiving slit of 0.3 mm, a measurement start angle of 3°, a measurement end angle of 90°, and a scan speed of 0.2°/min, with the phosphorus sulfide composition set in an airtight sample holder filled with argon gas.

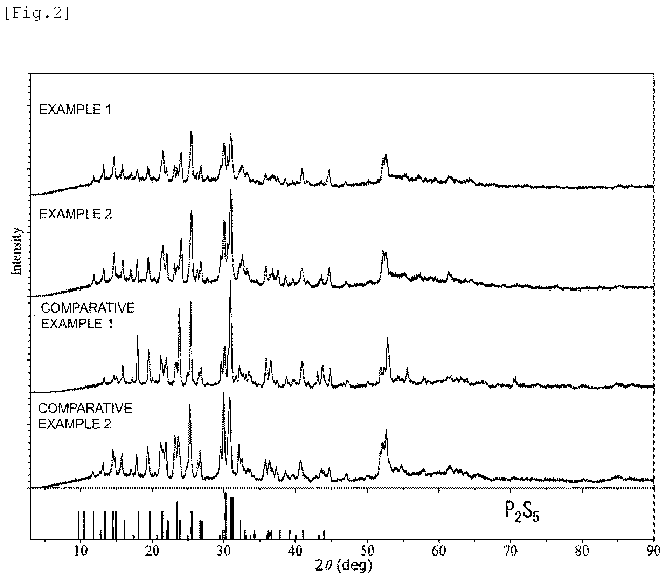

FIG. 2 shows an X-ray diffraction analysis spectrum of the phosphorus sulfide composition used in each of Examples and Comparative Examples. In addition, FIG. 3 shows an enlarged view of the X-ray diffraction analysis spectrum of the phosphorus sulfide composition used in each of Examples and Comparative Examples in a range of 2θ = 20° to 30°. In addition, Table 1 shows the number of peaks in a range of 2θ = 22.5° or more and 24.5° or less in the X-ray diffraction analysis spectrum of the phosphorus sulfide composition used in each of Examples and Comparative Examples.

(5) Measurement of Degree of Crystallization

First, using an X-ray diffractometer (RINT2000, manufactured by Rigaku Corporation), the X-ray diffraction analysis spectrum of each of the phosphorus sulfide compositions was obtained by using CuKα rays as a radiation source under the conditions of a voltage of 40 kV, a current of 40 mA, a divergence slit of 1°, a divergence slit vertical limit of 10 mm, a scattering slit of 1°, a receiving slit of 0.3 mm, a measurement start angle of 3°, a measurement end angle of 90°, and a scan speed of 0.2°/min, with the phosphorus sulfide composition set in an airtight sample holder filled with argon gas.

Next, the degree of crystallization of each of the phosphorus sulfide compositions used in Examples and Comparative Examples was calculated from the obtained X-ray diffraction spectrum using the following peak separation method.

First, in the X-ray diffraction pattern, the peaks were separated into a crystalline diffraction curve and an amorphous halo using a profile fitting method without considering the influence of non-interference scattering, lattice disorder, and the like. For profile fitting, analysis software attached to the X-ray diffractometer (product name: integrated powder X-ray analysis software PDXL application analysis (degree of crystallization), manufactured by Rigaku Corporation) was used.

A specific procedure for calculating the degree of crystallization is as follows (refer to FIG. 4; X-ray diffraction handbook, Rigaku Corporation, February 21, 2000, third edition, p. 83, FIG. 3.6.2).

(1) Separation of Background

The X-ray intensities from the low angle side to the high angle side were connected by a straight line, and the area below the straight line was used as a background.

(2) Separation of Halo

A halo pattern due to the amorphous substance was estimated, and the halo is separated from the scattering curve from which the background was subtracted.

(3) Separation of Crystalline Diffraction Curve

A crystalline diffraction curve was separated by the same method as in (2) described above.

(4) Calculation of Degree of Crystallization

The degree of crystallization was calculated from the following Equation (1) using the area (integrated intensity) under the curve of the diffraction curve of the amorphous component (the amorphous halo) and the diffraction curve of the crystalline component (the crystalline diffraction curve) separated from the scattering curve.

$$Xc = \{Ic/(Ic + Ia)\} \times 100 \ldots (1)$$

Ic: area (integrated intensity) under curve of diffraction curve (crystalline diffraction curve) of crystalline component
Ia: area (integrated intensity) under curve of diffraction curve (amorphous halo) of amorphous component

(6) Measurement of Amount of Heat of Fusion

The phosphorus sulfide compositions used in Examples and Comparative Examples were each subjected to a DSC measurement as follows. First, 20 to 25 mg of the phosphorus sulfide composition was weighed in an aluminum pan in an argon atmosphere and used as a sample. Next, the sample was subjected to differential scanning calorimetry using a differential scanning calorimeter (DSC6300, manufactured by Seiko Instruments Inc.) under conditions of an initial temperature of 25°C, a measurement temperature range of 30°C to 350°C, a temperature rising rate of 5°C/min, and an atmosphere of 100 ml/min of argon. From the obtained DSC curve, the amount of heat of fusion (J/g) of the endothermic peak in a temperature range of 280°C or higher and 300°C or lower was calculated.

The amount of heat of fusion of the endothermic peak was calculated by obtaining an area surrounded by the melting endothermic curve including the endothermic peak and the baseline. The baseline at the endothermic peak was a line connecting a point R and a point S shown in FIG. 5.

[2] Production of Sulfide-Based Inorganic Solid Electrolyte Material]

<Example 1>

(Production of $Li_{10}P_3S_{12}$)

1.27 g of a powdery phosphorus sulfide composition 1 (product name: Normal/S, Lot. 22D1218453, manufactured by Perimeter Solutions), 0.79 g of $Li_2S$ (manufactured by FURUKAWA CO., LTD., purity: 99.9%), and 0.04 g of $Li_3N$ (manufactured by FURUKAWA CO., LTD.) were weighed in an argon atmosphere at 20°C.

Next, the weighed phosphorus sulfide composition 1, $Li_2S$, and $Li_3N$ were mixed while being ground in a mortar in an argon atmosphere at 20°C to obtain a mixture (a1).

2.1 g of the obtained mixture (a1) was subjected to a mechanochemical process using a planetary ball mill (45 mL zirconia pot using 18 zirconia balls having a diameter of 10 mm) in an argon atmosphere at 20°C, thereby obtaining a material (b1). More specifically, a process of mechanically milling the mixture (a1) at 400 rpm for 10 minutes and then allowing the mixture to stand for 5 minutes was performed for 120 cycles to obtain a material (b1). During the mechanical milling, the powder attached to the wall surface of the zirconia pot and the surface of the zirconia ball was scraped off after 15 hours from the start of the mechanochemical process.

The obtained material (b1) was placed in a carbon crucible and subjected to a heating process in a heating furnace under an argon atmosphere at 270°C for 2 hours, thereby obtaining a sulfide-based inorganic solid electrolyte material represented by $Li_{10}P_3S_{12}$.

(Production of $Li_3PS_4$)

1.3 g of the powdery phosphorus sulfide composition 1 (product name: Normal/S, Lot. 22D1218453, manufactured by Perimeter Solutions) and 0.8 g of $Li_2S$ (manufactured by FURUKAWA CO., LTD., purity: 99.9%) were weighed in an argon atmosphere at 20°C.

Next, the weighed phosphorus sulfide composition 1 and $Li_2S$ were mixed while being ground in a mortar in an argon atmosphere at 20°C to obtain a mixture (a2).

2.1 g of the obtained mixture (a2) was subjected to a mechanochemical process using a planetary ball mill (45 mL zirconia pot using 18 zirconia balls having a diameter of 10 mm) in an argon atmosphere at 20°C, thereby obtaining a material (b2). More specifically, a process of mechanically milling the mixture (a2) at 400 rpm for 10 minutes and then allowing the mixture to stand for 5 minutes was performed for 120 cycles to obtain a material (b2). During the mechanical milling, the powder attached to the wall surface of the zirconia pot and the surface of the zirconia ball was scraped off after 15 hours from the start of the mechanochemical process.

The obtained material (b2) was placed in a carbon crucible and subjected to a heating process in a heating furnace under an argon atmosphere at 270°C for 2 hours, thereby obtaining a sulfide-based inorganic solid electrolyte material represented by $Li_3PS_4$.

<Example 2>

A sulfide-based inorganic solid electrolyte material represented by $Li_{10}P_3S_{12}$ and a sulfide-based inorganic solid electrolyte material represented by $Li_3PS_4$ were respectively obtained in the same manner as in Example 1, except that a powdery phosphorus sulfide composition 2 (Grade 1, Lot. 607H1801, manufactured by Kanto Chemical Co., Inc.) was used instead of the phosphorus sulfide composition 1.

<Comparative Example 1>

50 g of the powdery phosphorus sulfide composition 1 (product name: Normal/S, Lot. 22D1218453, manufactured by Perimeter Solutions) was placed in a quartz container, set in a vacuum heating device (manufactured by FURUKAWA CO., LTD.), and heated at 300°C for 2 hours under reduced pressure of -0.094 MPa.

Next, the quartz container heated to 300°C was immersed in a bucket filled with water while each valve was closed and a vacuum state was maintained, and the temperature was rapidly lowered to 30°C. The components accumulated at the bottom of the quartz container cooled to 30°C were defined as "phosphorus sulfide composition 3".

Next, a sulfide-based inorganic solid electrolyte material represented by $Li_{10}P_3S_{12}$ and a sulfide-based inorganic solid electrolyte material represented by $Li_3PS_4$ were respectively obtained in the same manner as in Example 1, except that the phosphorus sulfide composition 3 was used instead of the phosphorus sulfide composition 1.

<Comparative Example 2>

A sulfide-based inorganic solid electrolyte material represented by $Li_{10}P_3S_{12}$ and a sulfide-based inorganic solid electrolyte material represented by $Li_3PS_4$ were respectively obtained in the same manner as in Example 1, except that a powdery phosphorus sulfide composition 4 (product name: Normal/eXG, Lot. 22D1222095, manufactured by Perimeter Solutions) was used instead of the phosphorus sulfide composition 1.

[Table 1]

Table 1

| | Properties of used phosphorus sulfide composition | | | | | | | Lithium ion conductivity of sulfide-based inorganic solid electrolyte material | |
|---|---|---|---|---|---|---|---|---|---|
| | Content of $P_2S_5$ [% by mass] | Content of $P_4S_9$ [% by mass] | Content of $P_4S_7$ [% by mass] | Content of $P_4S_3$ [% by mass] | Number of peaks in $2\theta$ = 22.5° to 24.5° in X-ray diffraction analysis spectrum | Degree of crystallization [%] | Amount of heat of fusion of the endothermic peak in temperature range of 280°C or higher and 300°C or lower [J/g] | $Li_{10}P_3S_{12}$ | $Li_3PS_4$ |
| Example 1 | 40 | 60 | 0 | 0 | 3 | 60 | 81 | $1.5 \times 10^{-3}$ | $1.2 \times 10^{-3}$ |
| Example 2 | 50 | 50 | 0 | 0 | 3 | 53 | 83 | $1.6 \times 10^{-3}$ | $1.4 \times 10^{-3}$ |
| Comparative Example 1 | 80 | 20 | 0 | 0 | 2 | 68 | 96 | $1.2 \times 10^{-3}$ | $0.8 \times 10^{-3}$ |
| Comparative Example 2 | 80 | 20 | 0 | 0 | 2 | 71 | 69 | $0.7 \times 10^{-3}$ | $0.4 \times 10^{-3}$ |

The sulfide-based inorganic solid electrolyte materials of Examples had improved lithium ion conductivity as compared with the sulfide-based inorganic solid electrolyte materials of Comparative Examples.

This application claims priority based on Japanese Patent Application No. 2022-181107, Japanese Patent Application No. 2022-181108, and Japanese Patent Application No. 2022-181109, filed on November 11, 2022, the entire disclosures of which are incorporated herein by reference.

REFERENCE SIGNS LIST

100 lithium ion battery
101 positive electrode active material layer
103 negative electrode active material layer
105 current collector
110 positive electrode
120 electrolyte layer
130 negative electrode

**Claims**

1.  A method for producing a sulfide-based inorganic solid electrolyte material, the method comprising:

    a step of obtaining a sulfide-based inorganic solid electrolyte material in a vitreous state by mechanically processing a raw material composition of the sulfide-based inorganic solid electrolyte material including lithium sulfide and a phosphorus sulfide composition such that each component is vitrified in a chemical reaction, wherein the phosphorus sulfide composition has three or more peaks in a range of $2\theta = 22.5°$ or more and $24.5°$ or less in an X-ray diffraction analysis spectrum obtained by a method described in <X-ray diffraction analysis> below,
    <X-ray diffraction analysis>
    using an X-ray diffractometer, an X-ray diffraction analysis spectrum of the phosphorus sulfide composition is obtained by using $CuK\alpha$ rays as a radiation source under conditions of a voltage of 40 kV, a current of 40 mA, a divergence slit of 1°, a divergence slit vertical limit of 10 mm, a scattering slit of 1°, a receiving slit of 0.3 mm, a measurement start angle of 3°, a measurement end angle of 90°, and a scan speed of 0.2°/min, with the phosphorus sulfide composition set in an airtight sample holder filled with argon gas.

2.  The method for producing a sulfide-based inorganic solid electrolyte material according to Claim 1, wherein the phosphorus sulfide composition includes $P_2S_5$.

3.  The method for producing a sulfide-based inorganic solid electrolyte material according to Claim 2, wherein a content of the $P_2S_5$ in the phosphorus sulfide composition is 20% by mass or more.

4.  The method for producing a sulfide-based inorganic solid electrolyte material according to any one of Claims 1 to 3, wherein the phosphorus sulfide composition is powdery.

5.  The method for producing a sulfide-based inorganic solid electrolyte material according to any one of Claims 1 to 4, wherein the mechanical process includes a mechanochemical process.

6.  The method for producing a sulfide-based inorganic solid electrolyte material according to any one of Claims 1 to 5, further comprising:
    a step of heating the sulfide-based inorganic solid electrolyte material in the vitreous state in a range of 180°C or higher and 500°C or lower.

7.  The method for producing a sulfide-based inorganic solid electrolyte material according to any one of Claims 1 to 6,

    wherein a lithium ion conductivity of the sulfide-based inorganic solid electrolyte material, which is measured by a method described in <Measurement of lithium ion conductivity> below, is $1.0 \times 10^{-3}$ S/cm or more,
    <Measurement of lithium ion conductivity>

first, 110 mg of the sulfide-based inorganic solid electrolyte material is pressed under conditions of 270 MPa and 10 minutes to obtain a disk-shaped sample having a diameter of 9.5 mm and a thickness of 1 mm, and next, using an electrochemical measuring device, a lithium ion conductivity of the obtained disk-shaped sample is measured by an alternating current impedance method using a Li foil as an electrode under conditions of an applied voltage of 10 mV, a measurement frequency range of 0.1 Hz to 3 MHz, and a measurement temperature of 27°C.

8. A sulfide-based inorganic solid electrolyte material obtained by the method for producing a sulfide-based inorganic solid electrolyte material according to any one of Claims 1 to 7.

9. A method for producing a phosphorus sulfide composition, the method comprising:

a step of selecting a phosphorus sulfide composition having three or more peaks in a range of $2\theta = 22.5°$ or more and 24.5° or less in an X-ray diffraction analysis spectrum obtained by a method described in <X-ray diffraction analysis> below,
<X-ray diffraction analysis>
using an X-ray diffractometer, an X-ray diffraction analysis spectrum of the phosphorus sulfide composition is obtained by using CuK$\alpha$ rays as a radiation source under conditions of a voltage of 40 kV, a current of 40 mA, a divergence slit of 1°, a divergence slit vertical limit of 10 mm, a scattering slit of 1°, a receiving slit of 0.3 mm, a measurement start angle of 3°, a measurement end angle of 90°, and a scan speed of 0.2°/min, with the phosphorus sulfide composition set in an airtight sample holder filled with argon gas.

10. The method for producing a phosphorus sulfide composition according to Claim 9,
wherein the phosphorus sulfide composition includes $P_2S_5$.

11. The method for producing a phosphorus sulfide composition according to Claim 10,
wherein a content of the $P_2S_5$ in the phosphorus sulfide composition is 20% by mass or more.

12. The method for producing a phosphorus sulfide composition according to any one of Claims 9 to 11,
wherein the phosphorus sulfide composition is powdery.

13. A method for producing a sulfide-based inorganic solid electrolyte material, the method comprising:

a step of obtaining a phosphorus sulfide composition by using the method for producing a phosphorus sulfide composition according to any one of Claims 9 to 12; and
a step of obtaining a sulfide-based inorganic solid electrolyte material in a vitreous state by mechanically processing a raw material composition of the sulfide-based inorganic solid electrolyte material including lithium sulfide and the phosphorus sulfide composition such that each component is vitrified in a chemical reaction.

14. The method for producing a sulfide-based inorganic solid electrolyte material according to Claim 13,
wherein the mechanical process includes a mechanochemical process.

15. The method for producing a sulfide-based inorganic solid electrolyte material according to Claim 13 or 14, further comprising:
a step of heating the sulfide-based inorganic solid electrolyte material in the vitreous state in a range of 180°C or higher and 500°C or lower.

16. The method for producing a sulfide-based inorganic solid electrolyte material according to any one of Claims 13 to 15,

wherein a lithium ion conductivity of the sulfide-based inorganic solid electrolyte material, which is measured by a method described in <Measurement of lithium ion conductivity> below, is $1.0 \times 10^{-3}$ S/cm or more,
<Measurement of lithium ion conductivity>
first, 110 mg of the sulfide-based inorganic solid electrolyte material is pressed under conditions of 270 MPa and 10 minutes to obtain a disk-shaped sample having a diameter of 9.5 mm and a thickness of 1 mm, and next, using an electrochemical measuring device, a lithium ion conductivity of the obtained disk-shaped sample is measured by an alternating current impedance method using a Li foil as an electrode under the conditions of an applied voltage of 10 mV, a measurement frequency range of 0.1 Hz to 3 MHz, and a measurement temperature of 27°C.

17. A sulfide-based inorganic solid electrolyte material obtained by the method for producing a sulfide-based inorganic solid electrolyte material according to any one of Claims 13 to 16.

18. A method for evaluating a phosphorus sulfide composition, the method comprising:

a step of determining that a phosphorus sulfide composition having three or more peaks in a range of $2\theta = 22.5°$ or more and 24.5° or less in an X-ray diffraction analysis spectrum obtained by a method described in <X-ray diffraction analysis> below is acceptable,
<X-ray diffraction analysis>
using an X-ray diffractometer, an X-ray diffraction analysis spectrum of the phosphorus sulfide composition is obtained by using $CuK\alpha$ rays as a radiation source under conditions of a voltage of 40 kV, a current of 40 mA, a divergence slit of 1°, a divergence slit vertical limit of 10 mm, a scattering slit of 1°, a receiving slit of 0.3 mm, a measurement start angle of 3°, a measurement end angle of 90°, and a scan speed of 0.2°/min, with the phosphorus sulfide composition set in an airtight sample holder filled with argon gas.

19. The method for evaluating a phosphorus sulfide composition according to Claim 18, wherein the phosphorus sulfide composition includes $P_2S_5$.

20. The method for evaluating a phosphorus sulfide composition according to Claim 19, wherein a content of the $P_2S_5$ in the phosphorus sulfide composition is 20% by mass or more.

21. The method for evaluating a phosphorus sulfide composition according to any one of Claims 18 to 20, wherein the phosphorus sulfide composition is powdery.

22. A phosphorus sulfide composition for a sulfide-based inorganic solid electrolyte material, the phosphorus sulfide composition comprising:

at least $P_2S_5$ and $P_4S_9$,
wherein, in a case where a total content of $P_2S_5$, $P_4S_9$, $P_4S_7$, and $P_4S_3$ in the phosphorus sulfide composition is 100% by mass,
a content of the $P_2S_5$ calculated from a solid $^{31}$P-NMR spectrum is 30% by mass or more and 60% by mass or less, and
a degree of crystallization calculated from a spectrum obtained by X-ray diffraction using $CuK\alpha$ rays as a radiation source is 40% or more and 70% or less.

23. The phosphorus sulfide composition according to Claim 22, wherein a content of the $P_4S_9$ calculated from the solid $^{31}$P-NMR spectrum is 40% by mass or more and 70% by mass or less.

24. The phosphorus sulfide composition according to Claim 22 or 23, wherein a total content of the $P_2S_5$ and the $P_4S_9$ is 90% by mass or more.

25. The phosphorus sulfide composition according to any one of Claims 22 to 24, wherein in a DSC curve of the phosphorus sulfide composition, which is obtained by measurement with a differential scanning calorimeter, an endothermic peak is observed in a temperature range of 280°C or higher and 300°C or lower, and an amount of heat of fusion of the endothermic peak is 60 J/g or higher and 90 J/g or lower.

26. The phosphorus sulfide composition according to any one of Claims 22 to 25, wherein the phosphorus sulfide composition is powdery.

27. A raw material composition of a sulfide-based inorganic solid electrolyte material, the raw material composition comprising:

the phosphorus sulfide composition according to any one of Claims 22 to 26; and
lithium sulfide.

28. A method for producing a sulfide-based inorganic solid electrolyte material, the method comprising:
a step of mechanically processing the raw material composition of the sulfide-based inorganic solid electrolyte material according to Claim 27.

29. A sulfide-based inorganic solid electrolyte material comprising:
a mechanically processed product of the raw material composition of the sulfide-based inorganic solid electrolyte material according to Claim 27.

30. A sulfide-based inorganic solid electrolyte comprising:
the sulfide-based inorganic solid electrolyte material according to any one of Claims 8, 17, and 29.

31. A sulfide-based inorganic solid electrolyte membrane comprising:
the sulfide-based inorganic solid electrolyte according to Claim 30 as a main component.

32. A lithium ion battery comprising:

a positive electrode including a positive electrode active material layer;
an electrolyte layer; and
a negative electrode including a negative electrode active material layer,
wherein at least one of the positive electrode active material layer, the electrolyte layer, and the negative electrode active material layer includes the sulfide-based inorganic solid electrolyte material according to any one of Claims 8, 17, and 29.

[Fig.1]

[Fig.2]

[Fig.3]

[Fig.4]

[Fig.5]

## INTERNATIONAL SEARCH REPORT

| International application No. |
|---|
| **PCT/JP2023/039382** |

**A. CLASSIFICATION OF SUBJECT MATTER**

*H01B 13/00*(2006.01)i; *C01B 25/14*(2006.01)i; *C03B 8/00*(2006.01)i; *H01B 1/06*(2006.01)i; *H01B 1/10*(2006.01)i;
*H01M 4/62*(2006.01)i; *H01M 10/052*(2010.01)i; *H01M 10/0562*(2010.01)i
FI: H01B13/00 Z; H01M10/0562; H01M4/62 Z; H01B1/06 A; H01B1/10; H01M10/052; C03B8/00 C; C01B25/14

According to International Patent Classification (IPC) or to both national classification and IPC

**B. FIELDS SEARCHED**

Minimum documentation searched (classification system followed by classification symbols)

H01B13/00; C01B25/14; C03B8/00; H01B1/06; H01B1/10; H01M4/62; H01M10/052; H01M10/0562

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2020-61304 A (FURUKAWA CO., LTD.) 16 April 2020 (2020-04-16)<br>paragraphs [0020]-[0105], fig. 2 | 1-32 |
| A | WO 2021/065228 A1 (FURUKAWA CO., LTD.) 08 April 2021 (2021-04-08)<br>paragraphs [0021]-[0100] | 1-32 |
| A | JP 2018-92954 A (FURUKAWA CO., LTD.) 14 June 2018 (2018-06-14)<br>paragraphs [0016]-[0101] | 1-32 |
| A | JP 2018-29058 A (IDEMITSU KOSAN CO., LTD.) 22 February 2018 (2018-02-22)<br>paragraphs [0010]-[0091], fig. 1-7 | 1-32 |

☐ Further documents are listed in the continuation of Box C.   ☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **09 January 2024** | **16 January 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT
### Information on patent family members

| Patent document cited in search report | | | Publication date (day/month/year) | Patent family member(s) | | | Publication date (day/month/year) |
|---|---|---|---|---|---|---|---|
| JP | 2020-61304 | A | 16 April 2020 | (Family: none) | | | |
| WO | 2021/065228 | A1 | 08 April 2021 | US | 2022/0352545 | A1 | |
| | | | | paragraphs [0040]-[0241] | | | |
| | | | | EP | 4039642 | A1 | |
| | | | | CN | 114467148 | A | |
| | | | | KR | 10-2022-0059514 | A | |
| JP | 2018-92954 | A | 14 June 2018 | (Family: none) | | | |
| JP | 2018-29058 | A | 22 February 2018 | JP | 2021-192375 | A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016027545 A
- JP 2022181107 A
- JP 2022181108 A
- JP 2022181109 A

**Non-patent literature cited in the description**

- *J. Phys. Chem*, 1989, vol. 93, 452-457
- **HELLMUT ECKERT** ; **CHERYL S. LIANG** ; **GALEN D. STUCKY**. P magic angle spinning NMR of crystalline phosphorous sulfides. Correlation of P chemical shielding tensors with local environments. *J. Phys. Chem*, 1989, vol. 93, 452-457
- X-ray diffraction handbook. Rigaku Corporation, 21 February 2000, 83